# EUROPEAN PATENT SPECIFICATION

(11) **EP 2 080 983 B1**
(45) Date of publication and mention of the grant of the patent: **02.07.2014**
(21) Application number: 06811740.7
(22) Date of filing: 13.10.2006
(51) Int. Cl.: G01C 21/00, G01S 5/14, G01S 17/32, G03B 17/00, G06T 11/80, G08G 1/005

(54) **NAVIGATION SYSTEM, MOBILE TERMINAL DEVICE, AND ROUTE GUIDING METHOD**
NAVIGATIONSSYSTEM, MOBILES ENDGERÄT UND ROUTENFÜHRUNGSVERFAHREN
SYSTÈME DE NAVIGATION, DISPOSITIF DE BORNE MOBILE ET PROCÉDÉ DE GUIDAGE DE ROUTE

(43) Date of publication of application: 22.07.2009
(73) Proprietor: Navitime Japan Co., Ltd., Tokyo 107-0062 (JP)
(72) Inventor: AIHARA, Kenichi, Tokyo, 107-0062 (JP)
(74) Representative: HOFFMANN EITLE
(86) International application number: PCT/JP2006/320461
(87) International publication number: WO 2008/044309

(56) References cited:
- JP-A- 09 033 271
- JP-A- 2000 149 193
- JP-A- 2000 207 577
- JP-A- 2003 121 195
- JP-A- 2004 257 979
- JP-A- 2005 241 385
- JP-A- 2006 194 665
- US-A1- 2003 032 436
- US-A1- 2006 155 466

## Description

### TECHNICAL FIELD

The present invention relates to a communication-type pedestrian navigation system for searching a guide route from a departure point to a destination and providing guidance using image information in which the guide route is displayed in a display means, and particularly relates to a pedestrian navigation system configured so as to capture an image of a peripheral scene at an intersection or the like, display the image as a peripheral image in the display means, and display a route guidance image on the displayed peripheral image, whereupon the system is guided toward an imaging direction in which a route image can be displayed in a case in which a route image cannot be displayed on the peripheral image.

### BACKGROUND ART

In the past, when traveling to a destination in an unfamiliar place, a traveler followed an atlas or the like and arrived at the destination by identifying a transport facility, a road, a landmark, or an address shown in the map. In an automobile equipped with a car navigation system (hereinafter referred to as a car navigation system), a traveler reaches a destination while receiving guidance displayed on a monitor screen or voice guidance (navigation information) from the navigation system by activating the car navigation system and inputting the destination.

The car navigation system described above uses a GPS (Global Positioning System) in which GPS signals transmitted from a plurality of GPS satellites orbiting the earth are received by a GPS antenna, and a position is determined by analyzing satellite positions, time information, and the like that are included in the GPS signals. At least four or more of the plurality of GPS satellites are needed to determine a position. The accuracy of independent positioning in a GPS in general is a little over 10 m, but the accuracy is enhanced to 5 m or less through the use of a DGPS (Differential GPS). A trend in all models of so-called third-generation mobile telephones is the installation of GPS receivers that are currently installed only in some mobile telephones.

Techniques in various fields have been proposed for utilizing a mobile terminal that has this type of positioning capability. For example, a proposal has been made for the evolution of an automobile navigation device (car navigation system) into a communication-type navigation system used by a walker, in which map/route information is delivered from an information delivery server (route search server) using a mobile telephone as a terminal.

The performance of mobile telephones, PHS, and other mobile communication terminal devices has improved dramatically in recent years, and these devices are being provided with multifunction capability. Besides voice communication capability, data communication capability in particular is being emphasized, and various types of data communication services are provided to users over the Internet. A navigation service is one of these services, and a communication-type navigation system has been implemented for providing route guidance from a current position to a destination to not only the driver of an automobile, but also the user of a mobile telephone.

An example of the route search device and route search method used in a typical navigation device and communication navigation system is disclosed in Patent Document 1 (Japanese Laid-open Patent Application No. 2001-165681) below. In this navigation system, information relating to the departure point and the destination is transmitted from a mobile navigation terminal to an information delivery server, the information delivery server searches a route that matches search conditions from road network or transportation network data, and guidance is provided. The search conditions include the means of travel from the departure point to the destination, examples of which include walking, an automobile, a railroad, a combination of railroad and walking, and the like. The route search is performed using this factor as one search condition.

The information delivery server is provided with a database of cost information (distance or required time) for all links, wherein the links are routes that connect nodes, and nodes are the positions of junctions and turns in roads (routes) in the map data. The information delivery server can guide the mobile navigation terminal along the shortest route by referring to the database, sequentially searching the links that lead from the departure point node to the destination node, and creating a guide route by tracing nodes and links for which the cost information of the link indicates the smallest cost. A technique known as a label setting algorithm or a Dijkstra algorithm is used as the technique for performing this type of route search. In Patent Document 1 mentioned above, a route search method that uses this Dijkstra algorithm is also disclosed.

In a typical communication-type navigation system, the map information or guide route information displayed by the terminal device is downloaded from a route search server or other server device connected to the terminal device via a network. The terminal device to which the map information or guide route is delivered from the route search server or other information delivery server is provided with a liquid crystal display device or other display means, the map and guide route are displayed in the display means as well as the current position (current position of the terminal device) of the walker or automobile on the guide route, and the walker or automobile is guided to the destination.

The map displayed in the display means is typically a plan view, i.e., a two-dimensional map display, but methods have been proposed for displaying a planar aerial map that brings a sense of perspective to the display image, or an aerial map in which buildings are simulated in three dimensions in order to make landmarks or buildings easier to recognize, or for displaying roads or buildings as three-dimensional polygon images by a Z buffer method.

For example, Patent Document 2 (Japanese Laid-open Patent Application No. 2001-27535) discloses a map display device in which buildings or roads are displayed in three dimensions. In the map display device disclosed in Patent Document 2, shading is added to the route guide line on a road to create a three-dimensional map display. When a positional relationship occurs in which the route guide line is hidden by a building, the overlapped portion and the non-overlapped portion of the route guide line are displayed in different colors. In particular, the display color of the route guide line and the display color of buildings are drawn by a semi-transparency method of setting mutually different colors in the pixel units in VRAM (video RAM), and the relative positioning of buildings and the route guide line is clarified to enhance the visibility of the route guide line.

In order to create a display such as described above, building shape data and height information are stored in the map data in the map display device disclosed in Patent Document 2, and multi-level crossings and other road shape data are also stored. Based on this map data, buildings or multi-level road crossings are drawn in three dimensions in a drawing unit, and when the vehicle arrives at a position for which route guidance is to be provided, the desired image is drawn in the drawing unit, a predetermined sound is outputted by a voice output unit, and the user is guided to the destination.

A map is generally displayed in three dimensions using polygon data in the following manner. Specifically, the surfaces that form each building to be displayed in the map are prepared as polygon data, and the building polygon data are transmitted together with the map data to the map display device. The map display device displays the map and displays each building positions on the map in three dimensions using the polygon data. At this time, textures are applied to the surfaces of the buildings and displayed in order to more realistically display the buildings. The textures are data for showing patterns on the surfaces of the buildings, and include the shapes of windows in the buildings, wall designs, and the like.

For example, Patent Document 3 (Japanese Laid-open Patent Application No. 2000-259861) below discloses a texture mapping device whereby textures are applied to polygon data and drawn. The invention disclosed in Patent Document 3 accurately and efficiently applies textures to polygons and facilitates subsequent editing. This texture mapping device designates square polygons P1 through P4 arranged in M lines and N columns on a wire frame, and textures applied thereto. The textures to be applied are divided according to the ratio of the edge lengths Lp1 through Lp12 of the designated plurality of polygons P1 through P4. A configuration is adopted in which the orientation of the polygons is taken into account to apply the divided textures to the corresponding polygons.

When buildings are displayed in three dimensions using polygon data and texture data in this manner, the polygon data indicating the surfaces of the buildings, and the texture data to be applied to the surfaces have a one-to-one correspondence, the texture data are accumulated in the server database along with the polygon data, and the polygon data and texture data of the buildings to be displayed on the map are transmitted to the map display device together with a predetermined range of map data.

According to such a method for creating a three-dimensional map display, since the user of the terminal device can see a display image that approximates the scenery actually being observed, advantages are gained in that the user can easily recognize the locations of right or left turns and the direction of travel. In order to obtain this advantage, however, map data for three-dimensional display separate from the plan-view map data are necessary in order to display the map in three dimensions. Three-dimensional map data include more data than plan-view map data, and a large-capacity storage device is needed as the storage device for storing the map data. In a communication-type navigation system, the communication load between the terminal device and the route search server is also large, and there are also long communication times. Therefore, various problems arise such as the need for processing performance in the route search server sufficient to provide service to numerous terminal devices.

In order to overcome such problems, navigation devices have been proposed in Patent Document 4 (Japanese Laid-open Patent Application No. 2004-257979) and Patent Document 5 (Japanese Laid-open Patent Application No. 2006-162442), in which an image of a scene in the forward direction is captured using a CCD camera or other imaging means, the captured peripheral image is displayed on a display screen, a forward direction guidance image of a right turn or a left turn is displayed superimposed on the peripheral image, and the guide route is displayed in a car-mounted navigation device.

Specifically, in the navigation device disclosed in Patent Document 4, an imaging means for imaging a scene in the forward direction, and a display means for displaying the image captured by the imaging means are provided, and when a branch point on a route detected by a route detection means, and the current position detected by a current position detection means are equal to or less than a predetermined distance from each other, an image for guiding in the recommended direction of travel at the branch point is superimposed on the image captured by the imaging means and displayed in the display means.

In the navigation device disclosed in Patent Document 5, a guide information specifying unit is provided with a guide information specifying unit for specifying a position on a map for presenting guide information, and the type of guide information presented; an obstacle detection unit for detecting the position and type of obstacles (pedestrians, vehicles, and the like) around the vehicle in which the device is used through the use of object recognition or the like; a display position determination unit for calculating a position that does not coincide with an obstacle detected in a display position of the guide information; and an image output unit for outputting guide information in a determined position within the windshield view of the vehicle, or a determined position within the frontal image display area; and the direction of travel along the route is superimposed and displayed on the actual scene viewed from the vehicle.

Navigation systems for use by a walker also include the mobile terminal device navigation device disclosed in Patent Document 6 (Japanese Laid-open Patent Application No. 2005-241385) in which the route direction is superimposed and displayed on an image of the actual surroundings that is captured by a camera. In this mobile terminal device, the screen of the digital camera is demarcated based on the current position of the user (destination guidance device), destination direction coordinates that correspond to the destination are determined for the screen, and an instructional display with respect to the destination direction coordinates is superimposed on the captured camera image on the screen on the basis of a predetermined reference point (the middle of the lower edge of the screen).
[Patent Document 1]: Japanese Laid-open Patent Application No. 2001-165681 (FIGS. 1 and 2)
[Patent Document 2]: Japanese Laid-open Patent Application No. 2001-27535 (FIGS. 1 and 4, paragraph [0054])
[Patent Document 3]: Japanese Laid-open Patent Application No. 2000-259861 (FIGS. 2 and 8)
[Patent Document 4]: Japanese Laid-open Patent Application No. 2004-257979 (FIG. 4)
[Patent Document 5]: Japanese Laid-open Patent Application No. 2006-162442 (FIGS. 4 and 5)
[Patent Document 6]: Japanese Laid-open Patent Application No. 2005-241385 (FIG. 9)

### DISCLOSURE OF THE INVENTION

### [Problems the Invention Is Intended To Solve]

When a technique for displaying a peripheral image captured by a camera or other imaging means and displaying a forward direction or guide route on the peripheral image is used in a car-mounted navigation device, since the orientation of the camera for imaging the actual scene is fixed in the forward direction (forward direction) of the vehicle as a characteristic of automobile movement, the route essentially continues forward at all times during driving along the route. Even when there is a departure from the guide route as a result of a wrong turn, since the guide route is reset to the forward direction of the vehicle by a rerouting function (researching function) in the route search, the guide route always appears in front of the vehicle, i.e., in front of the imaging camera.

A walker navigation device differs from a vehicle-mounted navigation device in that the navigation device is not fixed in the forward direction, as in the case of a vehicle-mounted device, and the device can be oriented in any direction depending on the orientation of the user or the manner in which the user holds the device. For example, for navigation, the orientation of the terminal device when the map image or guide route is displayed is entirely arbitrary, and there is no guarantee that the guide route will be included in the image displayed at a given time. Since the horizontal field of view of the camera is adequately small in comparison to 360 degrees, the probability of the guide route being included in the screen display is somewhat low. The technique used for the vehicle-mounted navigation device disclosed in Patent Document 4 or 5 therefore cannot be applied to a walker navigation device without modification.

Consequently, in a pedestrian navigation system, several factors must be taken into account for the user when the guide route is not included in the peripheral image captured by the camera or other imaging means. In the mobile terminal for a walker according to Patent Document 6, an image of the scene in the forward direction is captured by a digital camera, and an instructional display for the destination direction is superimposed on the screen on the image captured by the camera. However, this mobile terminal device works on the assumption that the camera is oriented in the direction of the guide route, in basically the same manner as in a vehicle-mounted navigation device.

Specifically, this mobile terminal is configured so as to capture an image of the scene in the forward direction using a camera and display the guide route (forward direction) on the image, and has drawbacks in that no adaptation is made for cases in which the camera is not oriented in the forward direction. In such a mobile terminal, the guide route or guide displays for right and left turns can be displayed on the screen on which the image captured by the camera is displayed when the user is properly oriented in the forward direction with respect to the guide route at an intersection or the like, but when the camera orientation, i.e., the orientation of the mobile terminal, does not match the forward direction, drawbacks occur in that the guide route does not appear on the screen on which the image captured by the camera is displayed, and the guide route or forward direction cannot be indicated to the user on the image captured by the camera.

In addition to the above, US 2006/155466 A1 discloses a mobile terminal with a navigation function that superimposes a travelling direction on a picture photographed by the mobile device's camera. This is effected based on map data, data indicating a route, information of the present location of the device, and a direction of the camera received from an electric compass. The respective teaching, however, is silent on any problems that arise when the picture taken by the camera does not comprise an area in which the navigation route, or parts thereof, is/are located.

Yet further, US 2003/032436 A1 discloses a CDMA terminal with a camera device, a display device, an angle sensor, a magnetic sensor, and a GPS unit. The respective teaching considers displaying a so-called *"special flashing or coloring process for an arrow"* of a direction to the position of the facility when the position of the facility is out of the screen of the display device.

As a result of various studies of the problems described above, the inventors developed the present invention upon discovering that the problems described above can be overcome by providing a CCD camera or other imaging means and an orientation detection means composed of a magnetic bearing sensor, a tilt sensor, or the like to a mobile terminal device in a communication-type pedestrian navigation system, wherein, according to an aspect of the invention, the angle with respect to the horizon, or the orientation direction of the mobile terminal device is detected by the orientation detection means, and when the guide route is not included in the peripheral image captured by the imaging means, a display is provided indicating how the orientation of the imaging means, i.e., the mobile terminal device, should be corrected.

Specifically, an object of the present invention, which is aimed at overcoming the problems described above, is to provide a pedestrian navigation system for displaying a route guide image on a peripheral image captured by an imaging means, whereupon the system is guided toward an imaging direction in which a route image can be displayed in a case in which the route image cannot be displayed on the peripheral image.

### [Means for Solving the Abovementioned Problems]

The mentioned problems are solved by the subject-matter of the independent claims. Further preferred embodiments are defined in the dependent claims.

A first example is a navigation system comprising a route search server provided with route search means for referencing network data for route searching, and searching a guide route from a departure point to a destination; and a mobile terminal device having guide information storage means for storing guide information that includes guide route data, GPS receiving means for determining a current position, imaging means, display means for displaying a peripheral image captured by the imaging means, and drawing control means for displaying a guide route image on the peripheral image displayed by the display means; wherein the navigation system is **characterized in that** the mobile terminal device has orientation detection means for detecting the orientation of the mobile terminal device when the imaging means has captured the peripheral image, and image layout means for determining a display position of the guide route image or the forward direction guide image on the basis of the orientation of the mobile terminal device as detected by the orientation detection means; and, the drawing control means displays an imaging direction guide image for guiding the imaging means toward an orientation at which an image is to be captured by the imaging means on the peripheral image on the basis of the orientation of said mobile terminal device and the orientation of said guide route from the current position when the image layout means determines that said guide route is not included in said peripheral image displayed by the display means.

In the above, the orientation detection means preferably comprises bearing detection means for detecting the orientation of the imaging means when the imaging means has captured a peripheral image, and tilt angle detection means for detecting the tilt angle of the imaging means with respect to the horizontal direction.

In the above, the image layout means preferably determines the display position of the guide route image displayed on the peripheral image, so that the upward direction of the peripheral image is vertical based on the angle of the optical axis of said imaging means, shifts said peripheral image by an amount that corresponds to the angle of the optical axis with the horizontal direction, and corrects and determines the display position so that the center of the peripheral image is in the horizontal direction, on the basis of the orientation of the mobile terminal device as detected by the orientation detection means, when the guide route is included in the peripheral image displayed by the display means.

In the above, the drawing control means preferably displays an imaging direction guide image for guiding the imaging means from the current position toward a direction in which the guide route is present, as an orientation in which an image is to be captured by the imaging means on the peripheral image, when the image layout means determines that the guide route from the current position is not included in the peripheral image displayed by said display means.

Furthermore, in the above, the imaging direction guide image displayed by the drawing control means is preferably displayed using a different image than the forward direction guide image for guiding the imaging means in the forward direction of the guide route from the current position.

A second example is a mobile terminal device connected via a network to a route search server provided with route search means for referencing network data for route searching, and searching a guide route from a departure point to a destination; the mobile terminal device comprising: guide information storage means for storing guide information that includes guide route data, GPS receiving means for determining a current position, imaging means, display means for displaying a peripheral image captured by the imaging means, and drawing control means for displaying a guide route image on the peripheral image displayed by the display means; wherein the mobile terminal device is **characterized in that** the mobile terminal device further comprises orientation detection means for detecting the orientation of the mobile terminal device when the imaging means has captured the peripheral image, and image layout means for determining a display position of the guide route image on the basis of the orientation of the mobile terminal device as detected by the orientation detection means; and the drawing control means displays an imaging direction guide image for guiding the imaging means toward an orientation at which an image is to be captured by the imaging means on the peripheral image on the basis of the orientation of said mobile terminal device and the orientation of said guide route from the current position when the image layout means determines that said guide route is not included in said peripheral image displayed by the display means.

In the second example, the orientation detection means preferably comprises bearing detection means for detecting the orientation of the imaging means when the imaging means has captured a peripheral image; and tilt angle detection means for detecting the tilt angle of the imaging means with respect to the horizontal direction.

In the second example, the image layout means preferably determines the display position of the guide route image displayed on the peripheral image, so that the upward direction of the peripheral image is vertical based on the angle of the optical axis of said imaging means, shifts said peripheral image by an amount that corresponds to the angle of the optical axis with the horizontal direction, and corrects and determines the display position so that the center of the peripheral image is in the horizontal direction, on the basis of the orientation of the mobile terminal device as detected by the orientation detection means, when the guide route is included in the peripheral image displayed by the display means.

In the second example, the drawing control means preferably displays an imaging direction guide image for guiding the imaging means from the current position toward a direction in which the guide route is present, as an orientation in which an image is to be captured by the imaging means on the peripheral image, when the image layout means determines that the guide route from the current position is not included in said peripheral image displayed by the display means.

Furthermore, in the second example, the imaging direction guide image displayed by the drawing control means is preferably displayed using a different image than the forward direction guide image for guiding the imaging means in the forward direction of the guide route from the current position.

Furthermore, a third example is a guide display method for a mobile terminal device, the mobile terminal device being connected via a network to a route search server provided with route search means for referencing network data for route searching, and searching a guide route from a departure point to a destination; the mobile terminal device comprising guide information storage means for storing guide information that includes guide route data, GPS receiving means for determining a current position, imaging means; display means for displaying a peripheral image captured by the imaging means, and drawing control means for displaying a guide route image on the peripheral image displayed by the display means; wherein the route guide display method is **characterized in that** the mobile terminal device further comprises orientation detection means for detecting the orientation of the mobile terminal device when the imaging means has captured the peripheral image, and image layout means for determining a display position of the guide route image so that the upward direction of the peripheral image is vertical based on the angle of the optical axis of said imaging means, shifting said peripheral image by an amount that corresponds to the angle of the optical axis with the horizontal direction, and correcting and determining the display position so that the center of the peripheral image is in the horizontal direction, on the basis of the orientation of the mobile terminal device as detected by the orientation detection means; and the route guide display method comprises a step of the image layout means determining whether said guide route is included in said peripheral image displayed by the display means, and a step of the drawing control means displaying an imaging direction guide image for guiding the imaging means toward an orientation at which an image is to be captured by the imaging means on the peripheral image on the basis of the orientation of said mobile terminal device and the orientation of said guide route from the current position when the image layout means determines that said guide route is not included in said peripheral image displayed by the display means.

In the third example, the orientation detection means preferably comprises bearing detection means for detecting the orientation of the imaging means when the imaging means has captured a peripheral image; and tilt angle detection means for detecting the tilt angle of the imaging means with respect to the horizontal direction; and the route guide display method preferably comprises a step of the image layout means determining, on the basis of detection output of the bearing detection means and tilt angle detection means, whether said guide route is included in said peripheral image displayed by the display means, and a step of the drawing control means displaying an imaging direction guide image for guiding the imaging means toward an orientation at which an image is to be captured by the imaging means on the peripheral image on the basis of the orientation of said mobile terminal device and the orientation of said guide route from the current position when said image layout means determines that said guide route is not included in said peripheral image displayed by the display means.

In the third example, the route guide display method preferably further comprises a step of determining the display position of the guide route image displayed on the peripheral image, so that the upward direction of the peripheral image is vertical based on the angle of the optical axis of said imaging means, shifts said peripheral image by an amount that corresponds to the angle of the optical axis with the horizontal direction, and corrects and determines the display position so that the center of the peripheral image is in the horizontal direction, on the basis of the orientation of the mobile terminal device as detected by the orientation detection means, when the image layout means determines that the guide route is included in the peripheral image displayed by the display means, in the step of the image layout means determining whether the guide route is included in the peripheral image displayed by the display means.

Also in the third example, the route guide display method preferably further comprises a step of the drawing control means displaying an imaging direction guide image for guiding the imaging means from the current position toward a direction in which the guide route is present, as an orientation in which an image is to be captured by the imaging means on the peripheral image, when the image layout means determines that the guide route from the current position is not included in said peripheral image displayed by the display means, in the step of the image layout means determining whether the guide route from the current position is included in said peripheral image displayed by the display means.

Furthermore, in the third example, the step of displaying the imaging direction guide image on the peripheral image preferably includes processing whereby the imaging direction guide image displayed by the drawing control means is displayed using a different image than the forward direction guide image for guiding the imaging means in the forward direction of the guide route from the current position.

### [Effect of the Invention]

In the present invention, the mobile terminal device comprises orientation detection means for detecting the orientation of the mobile terminal device when the imaging means has captured a peripheral image, and image layout means for determining the display position of the guide route image on the basis of the orientation of the mobile terminal device as detected by the orientation detection means; and the drawing control means displays an imaging direction guide image for guiding the imaging means toward an orientation at which an image is to be captured by the imaging means on the peripheral image on the basis of the orientation of said mobile terminal device and the orientation of said guide route from the current position when the image layout means determines that said guide route is not included in said peripheral image displayed by the display means.

According to such a configuration, even when the orientation of the camera as the imaging means, i.e., the orientation of the mobile terminal device, does not match the direction of the guide route, i.e., the forward direction, since the imaging direction guide image for guiding the camera toward the orientation in which an image is to be captured by the imaging means is displayed on the peripheral image, the user can correct the orientation of the mobile terminal device so that the guide route is displayed on the peripheral image by changing the imaging direction in accordance with the imaging direction guide image.

In an aspect of the present invention, the orientation detection means preferably comprises bearing detection means for detecting the orientation of the imaging means when the imaging means has captured a peripheral image; and tilt angle detection means for detecting the tilt angle of the imaging means with respect to the horizontal direction. Through this configuration, since it is possible to detect the orientation (bearing) and tilt angle of the optical axis of imaging by the imaging means, it is possible to determine the display position in which to display the guide route or the forward direction guide image with respect to the peripheral image.

In an aspect of the present invention, the image layout means preferably determines the display position of the guide route image displayed on the peripheral image, so that the upward direction of the peripheral image is vertical based on the angle of the optical axis of said imaging means, shifts said peripheral image by an amount that corresponds to the angle of the optical axis with the horizontal direction, and corrects and determines the display position so that the center of the peripheral image is in the horizontal direction, on the basis of the orientation of the mobile terminal device as detected by the orientation detection means, when the guide route is included in the peripheral image displayed by the display means. Through this configuration, it is possible to determine the display position in which to display the guide route or the forward direction guide image with respect to the peripheral image in accordance with the orientation of the mobile terminal device.

In an aspect of the present invention, the drawing control means preferably displays an imaging direction guide image for guiding the imaging means from the current position toward a direction in which the guide route is present, as an orientation in which an image is to be captured by the imaging means on the peripheral image, when the image layout means determines that the guide route from the current position is not included in said peripheral image displayed by the display means. Through this configuration, the imaging direction guide image indicating the direction in which the guide route is present is displayed as the orientation for imaging by the imaging means when the guide route is not included in the peripheral image displayed by the display means, and the user can therefore easily correct the orientation of the mobile terminal device so that the guide route is displayed in the peripheral image, by changing the imaging direction in accordance with the imaging direction guide image.

Furthermore, in another example the imaging direction guide image displayed by the drawing control means is preferably displayed using a different image than the forward direction guide image for guiding the imaging means in the forward direction of the guide route from the current position. Through this configuration, the user can easily distinguish between the forward direction guide image and the imaging direction guide image.

The present invention makes it also possible to provide the mobile terminal device, and to provide a route guide display method for implementing the mobile terminal device.

### BRIEF DESCRIPTION OF THE DRAWINGS

FIG. 1 is a block diagram showing the structure of the navigation system according to an embodiment of the present invention;
FIG. 2 is a schematic diagram showing the orientation of the mobile terminal device and the optical axis and imaging angle of the imaging means;
FIG. 3 is a diagram showing an example of the display image in a case in which a peripheral image captured by the imaging means is displayed in the display means in an image guide mode;
FIG. 4 is a diagram showing an example of the display image in a case in which the optical axis of the imaging means and the forward direction of the guide route are the same, and the guide route is within the range of the peripheral image displayed in the display means;

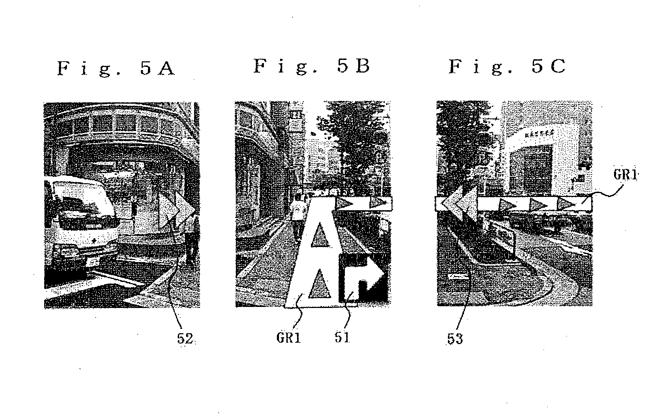

FIG. 5 is a diagram showing an example of the display image in order to describe the guide image display in cases in which the guide route is and is not included in the displayed peripheral image; wherein FIG. 5B shows an example of the display when the guide route is included in the displayed peripheral image; FIG. 5A shows an example of the display when the guide route is not included in the displayed peripheral image, and the guide route is to the right of the screen; and FIG. 5C shows an example of the display when the guide route is not included in the displayed peripheral image, and the guide route is to the left of the screen;
FIG. 6 is a plan view showing an example of the geometric relationship between the guide route and the optical axis of the imaging means;
FIG. 7 is a flowchart showing the sequence of operations in the navigation system according to an embodiment of the present invention;
FIG. 8 is a schematic diagram showing a conceptual view of road network data for route searching;
FIG. 9 is a schematic diagram showing a conceptual view of transportation network data for route searching using transportation facilities; and
FIG. 10 is a diagram showing the structure of the map data.

### [Key to Symbols]

- 10: navigation system
- 12: network
- 20: mobile terminal device
- 201: control means
- 21: GPS receiving means
- 22: imaging means
- 23: orientation detection means
- 24: image layout means
- 25: drawing control means
- 26: communication means
- 27: guide information storage means
- 28: display means
- 29: operational input means
- 30: route search server
- 301: control means
- 31: communication means
- 32: guide information collecting means
- 33: route search means
- 34: map database
- 35: route search network database

### BEST MODE FOR CARRYING OUT THE INVENTION

Embodiments of the present invention will be described in detail below using embodiments and drawings. However, the embodiments described hereinafter are merely examples of the navigation system intended to specify the technical idea of the present invention, and are not intended to specify the present invention as a navigation system. The present invention has equivalent applicability to other embodiments of a navigation system included in the scope of the claims.

### [Embodiments]

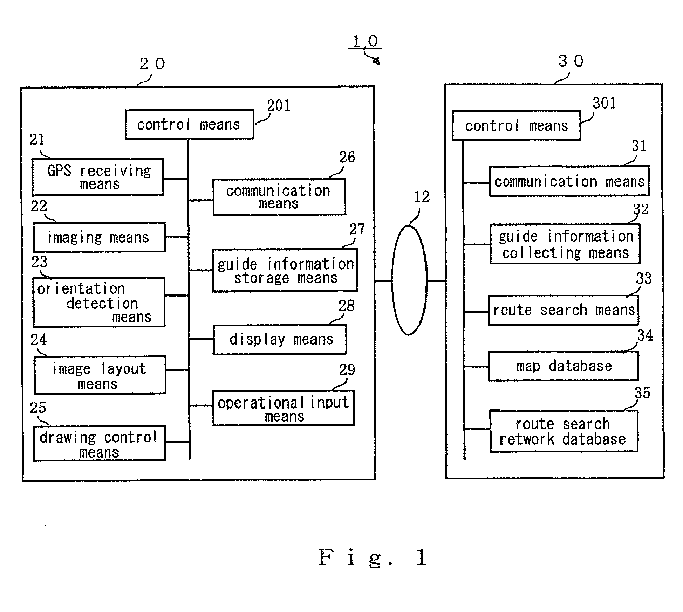

FIG. 1 is a block diagram showing the structure of the navigation system according to an embodiment of the present invention. The navigation system 10 is provided with a route search server 30 and a mobile terminal device 20 that are connected via the Internet or another network 12, as shown in FIG. 1. The route search server 30 is provided with a route search means 33, a map database 34 in which map data are accumulated, and a route search network database 35 in which transportation network data are accumulated that are road network data or public transportation facility network data used for route searching.

The route search server 30 is also provided with a control means 301, a communication means 31, and a guide information collecting means 32. The control means 301 is a microprocessor having RAM, ROM, and a processor (not shown), and controls the operation of each component through the use of a control program stored in the ROM. The communication means 31 is an interface for communicating with the mobile terminal device 20 via the network 12.

The route search server 30 references the route search network database 35 and searches for a guide route that matches the route search conditions when there is a route search request including a current position, a destination, a movement means (automobile, walking, a transportation facility, a combination of walking and a transportation facility, or the like) and other route search conditions from the mobile terminal device 20. The guide route data obtained as a result of the route search are collected in guide information (data) for transmission to the mobile terminal device 20 by the guide information collecting means 32, together with unit map data (map data divided into areas of predetermined size by latitude/longitude) of a predetermined range that include the current position of the mobile terminal device 20 and are selected from the map database 34. The collected guide information is delivered to the mobile terminal device 20.

The mobile terminal device 20 is provided with a control means 201, a GPS receiving means 21, an imaging means 22, an orientation detection means 23, an image layout means 24, a drawing control means 25, a communication means 26, a guide information storage means 27, a display means 28, an operational input means 29, and other components. The control means 201 is a microprocessor having RAM, ROM, and processor (not shown), and controls the operation of each component through the use of a control program stored in the ROM. The communication means 26 is an interface for communicating with the route search server 30 via the network 12.

The operational input means 29 is a means of operating/inputting composed of number keys or alphabet keys, and other function keys, selection keys, scroll keys, and the like, and various input operations can be performed by operating a key or selecting a desired menu from a menu screen displayed in the display means 28 that is an output means. The display means 28 therefore also functions as a component of the operational input means 29.

When a user requests a route search from the route search server 30, the user operates the operational input means 29 of the mobile terminal device 20, selects a route search from a service menu displayed in the display means 28, and inputs the current position, destination, movement means (automobile, walking, a transportation facility, a combination of walking and a transportation facility, or the like), and other route search conditions. The inputted route search conditions are collected in a delivery request to the route search server 30 and transmitted as a route search request to the route search server 30 via the communication means 26.

When the mobile terminal device 20 receives guide information that is the result of the route search from the route search server 30, the mobile terminal device 20 temporarily stores the guide information in the guide information storage means 27. The map image and the image of the guide route are usually displayed in the display means 28 with the current position of the mobile terminal device 20 at the center on the basis of the guide information. A current position mark is displayed in the corresponding position on the map image. When the current position is near an intersection node or the like on the guide route, a forward direction guide image is displayed that indicates a forward direction such as a right turn, a left turn, or straight ahead at the intersection node. When the mobile terminal device 20 is provided with a speaker or other output means, the mobile terminal device 20 may be configured so as to provide voice guidance for indicating the forward direction or distance to the intersection node by voice guidance.

A map display such as described above occurs in the case of a normal guidance mode. In the present embodiment, an image guide mode is provided in which a peripheral image is captured by the imaging means 22, the peripheral image is displayed in the display means 28 along with a guide route image or a forward direction guide image, and guidance is provided. This image guide mode will be referred to hereinafter as a live image mode. The switch to live image mode is preferably made by the orientation detection means 23 detecting the orientation of the mobile terminal device 20 as described hereinafter, and automatically switching to the live view mode when a predetermined state occurs. Of course, the user may also switch the mode through the use of the operational input means 29.

The focal length (ZOOM) of the imaging means 22 (CCD camera, for example) and the screen size of the display means 28 of the mobile terminal device 20 are fixed at predetermined set values. The GPS receiving means 21 measures the current position of the mobile terminal device 20 at prescribed time intervals, and it is therefore possible to specify the position at which the imaging means 22 is operated and the peripheral image captured. The measurements by the GPS receiving means 21 are made every 1 to 5 seconds, for example, when the mobile telephone is the mobile terminal device 20.

When the user holds the mobile terminal device 20 out forward, the orientation detection means 23 detects when the optical axis of the imaging means 22 is within a predetermined angle from horizontal, and the shutter of the imaging means 22 automatically operates to capture a peripheral image (still image) in the direction of the optical axis. Since the orientation detection means 23 is composed of a bearing sensor and a tilt sensor, the orientation (bearing) of the optical axis can be obtained from the bearing sensor output, and the angle formed by the optical axis and the horizontal direction can be obtained from the tilt sensor output. The orientation of the optical axis and the tilt angle are stored together with the peripheral image captured by the imaging means 22. The imaging angle of the imaging means 22 is generally tilted to a certain degree, and a captured peripheral moving image is captured so that the portions outside the display range also include an adequately wide range.

The peripheral image captured in this manner may be displayed without modification in the display means 28, but the corrections described below are also applied in the present embodiment. (1) Correction of rotation about the optical axis. Specifically, a correction is applied so that the upward direction of the image is vertical. (2) Correction of tilt in the vertical direction of the optical axis. The image is shifted by an amount that corresponds to the angle between the optical axis and the horizontal direction, and the image is centered in the horizontal direction. The height (distance) of the optical axis from the surface of the earth is also set to the eye height of a typical person.

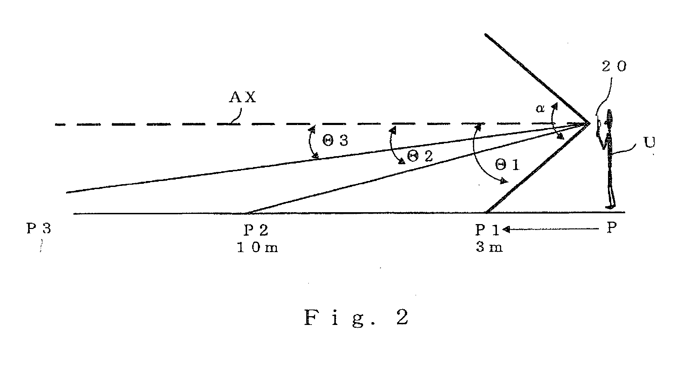

FIG. 2 is a schematic view showing the orientation, optical axis, and imaging angle of the imaging means 22. When the user U holds the mobile terminal device 20 out forward in order to capture a peripheral image at a certain position P, the orientation detection means 23 detects the angle between the horizontal direction and the optical axis AX of the imaging means 22, and when the angle is within a predetermined angle range, the shutter is automatically operated to capture a forward image. The imaging angle of the vertical direction with respect to the optical axis AX at this time is α.

Since the imaging means 22 captures the peripheral image at a predetermined focal length, the points P1, P2, and P3 in front of the imaging point P can each be computed from the angles Θ1, Θ2, and Θ3 with the optical axis AX, and it is possible to use the abovementioned angles to geometrically compute how far in meters a position in the display image is in front of the imaging position. Specifically, the point P1 in FIG. 2 is 3 m forward from the imaging point P, and is at the angle Θ1 from the optical axis. The point P2 is 10 m forward from the imaging point P, and is at the angle Θ2 from the optical axis. The point P3 (not shown) is 30 m forward from the imaging point P, and is at the angle Θ3 from the optical axis.

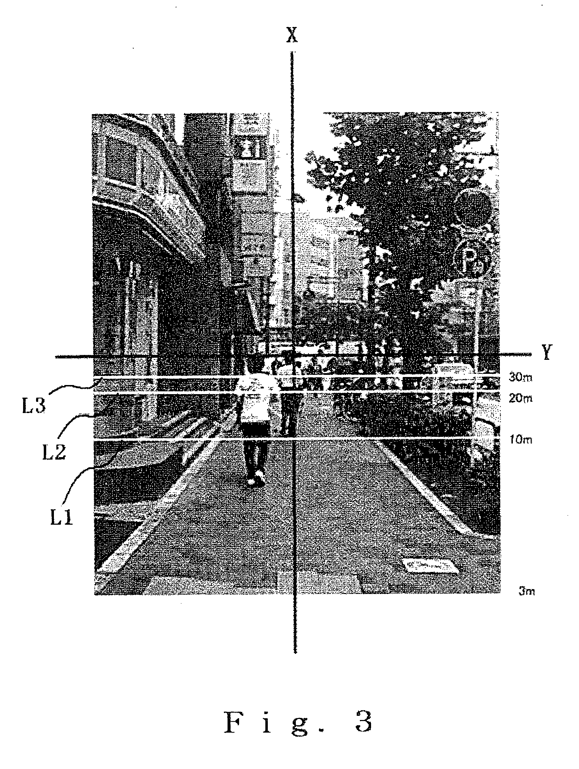

FIG. 3 is a diagram showing an example of the display screen in a case in which the peripheral image captured by the imaging means 22 in this manner is displayed in the display means 28. The peripheral image is displayed so that the center (intersection of lines X and Y in FIG. 3) of the display screen coincides with the optical axis AX and is in the horizontal direction. As described with reference to FIG. 2, an image showing (3 m ahead) for the point P1 forward from the imaging point P is at the bottom of the display image at the angle Θ1 with the optical axis. An image showing (10 m ahead) for the point P2 is at the position of a line L1 shown in the display image at the angle Θ2 with the optical axis. In the same manner, a point 20 m ahead is at the position of the line L2, and a point 30 m ahead is at the position of the line L3.

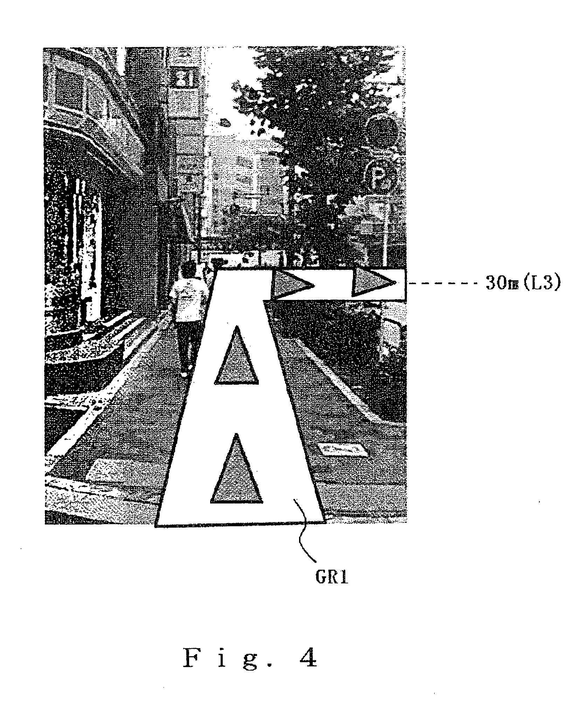

It is thereby possible to determine the display position and the position of the display image in which to display the guide route image by how far in meters the guide route is from the imaging point, and to provide route guidance in an image that is always stable, and the computational processing for determining the display position is simplified. Specifically, the position and direction of the guide route are calculated based on the position information (current position at the time of imaging) at the time the peripheral image is captured, i.e., the time the static image is acquired, and the guide route is drawn in a predetermined position on the display image with respect to the direction of the optical axis AX. FIG. 4 is a diagram showing an example of the display image, in which the optical axis AX and the forward direction of the guide route are the same, the guide route is present within the range of the peripheral image displayed on the screen, and a guide route image GRI for a right turn 30 m ahead of the imaging point is superimposed and drawn on the peripheral image. The image layout means 24 performs the calculation described above on the basis of the detection output of the orientation detection means 23 and determines the display position of the guide route image GRI.

Adequate adaptation was not made in the prior art for the display in a case in which the route forward direction is in a direction outside the range shown on the screen. A walker is not necessarily oriented in the forward direction of the guide route when at an intersection or the like. Therefore, when the peripheral image captured by the imaging means 22 is displayed on the display screen, the guide route image GRI is not necessarily included in the display region and displayed together with the peripheral image, as in FIG. 4.

FIG. 5 is a diagram showing an example of the display image in order to describe the guide image display in cases in which the guide route is and is not included in the displayed peripheral image; wherein FIG. 5B shows an example of the display when (FIG. 4) the guide route is included in the displayed peripheral image; FIG. 5A shows an example of the display when the guide route is not included in the displayed peripheral image, and the guide route is to the right of the screen; and FIG. 5C shows an example of the display when the guide route is not included in the displayed peripheral image, and the guide route is to the left of the screen.

When the walker is not oriented in the direction of the guide route or the forward direction of the guide route, and the peripheral image captured by the imaging means 22 is displayed on the screen of the display means 28, in a case in which the guide route is not included in the displayed peripheral image, the guide route is not in the display range, and therefore cannot be displayed even when there is a need to display the guide route image GRI or an arrow-shaped forward direction guide image 51 (see FIG. 5B) indicating a right or left turn, as in the prior art. FIG. 5A shows the display image for a state of leftward orientation with respect to the guide route, and none of the guide route is included. Consequently, the display disappears in the prior art, which is confusing to the user.

In the present invention, the direction in which the guide route and the forward direction thereof are present with respect to the peripheral image displayed in the display screen is determined by geometric computation from the optical axis angle and the position at which the peripheral image is captured by the imaging means 22, and the angle of a link or position of a node of the guide route. An imaging direction guide image (e.g., a triangular mark) for guiding the imaging means toward the imaging direction in which the guide route or the forward direction thereof can be displayed is thereby displayed, and the user is prompted to change the imaging direction. The user changes the imaging direction in accordance with the imaging direction guide image, and the guide route image or forward direction guide image can thereby be displayed on the peripheral image that is displayed on the display screen of the display means 28.

For example, when the guide route is to the right of the peripheral image displayed on the display screen, an imaging direction guide image 52 is displayed that indicates moving the imaging direction to the right, as shown in FIG. 5A. When the guide route is to the left of the peripheral image displayed on the display screen, an imaging direction guide image 53 is displayed that indicates moving the imaging direction to the left, as shown in FIG. 5C. Specifically, FIG. 5C shows a state of rightward orientation with respect to the guide route image GRI, and although the guide route is visible in the distance, the forward direction of the guide route is to the left of the current position P, and the imaging direction guide image (triangular mark) 53 is therefore displayed to direct imaging to the left.

When the user changes the imaging direction in accordance with the displayed imaging direction guide image (triangular mark) 52 or 53, the guide route is then included in the peripheral image displayed on the display screen, as shown in FIG. 5B, and the guide route image GRI or the forward direction guide image 51 can be displayed. This imaging direction guide image (triangular mark) is preferably a different image (mark) than the forward direction guide image (arrow mark in FIG. 5B) that indicates the right or left turn direction at an intersection or other guidance point, so that the difference in meaning is readily understood.

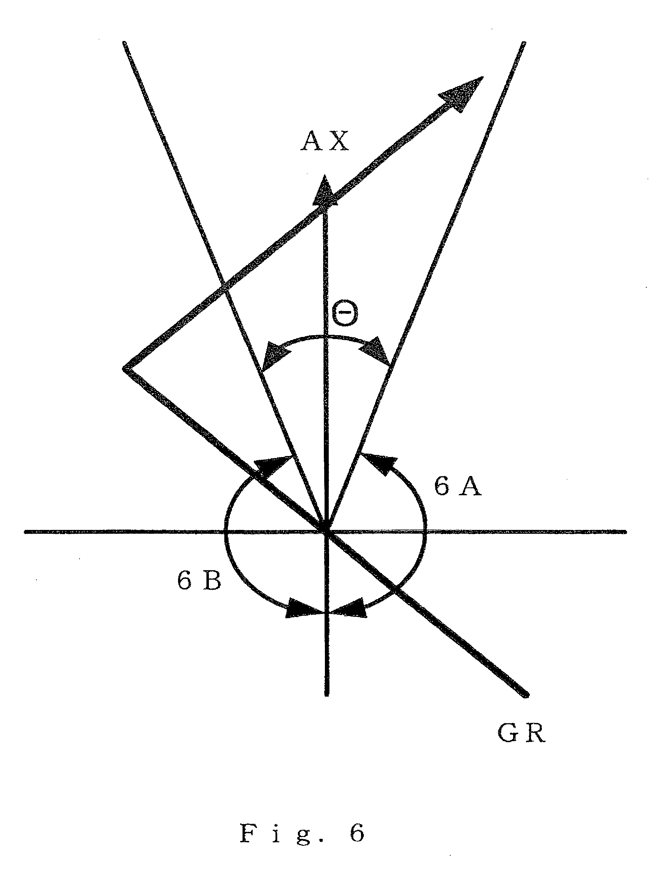

FIG. 6 is a schematic diagram for describing the concept of computing the imaging direction from the positional relationship of the optical axis direction and the guide route, and is a plan view showing the geometric relationship between the guide route GR and the optical axis AX (imaging direction) of the imaging means 22. When the imaging means 22 is oriented in the direction of the optical axis AX at point P and captures a peripheral image, the peripheral image displayed on the display screen of the display means 28 is an image having the range of angle Θ (referred to as the field of view) with the optical axis AX at the center thereof.

The guide route image GRI is displayed (FIG. 5B) when the current position, i.e., the forward direction of the guide route GR from the imaging position P, is within the range of the field of view Θ. The forward direction guide image 51 is displayed when the imaging position P is an intersection or other guidance point.

An instruction (the imaging direction guide image 53 of FIG. 5C) to move the imaging direction to the left is displayed when the forward direction of the guide route GR from the imaging position P is not within the field of view Θ, and is to the left as viewed from the optical axis AX. Specifically, FIG. 5C shows a case in which the mobile terminal device 20 (imaging means 22) is oriented to the right of the guide route image GR1, and although the route is visible in the distance, the forward direction of the guide route from the current position is to the left, and an imaging direction instruction image is therefore displayed that calls for movement to the left. This configuration is a characteristic feature of the present invention that differs from a display method in which the direction to the destination is shown on the display screen.

When the forward direction of the guide route GR from the imaging position P is not included in the field of view Θ, and is to the right as viewed from the optical axis AX, an instruction (the imaging direction guide image 52 of FIG. 5A) to move the imaging direction to the right is displayed. Specifically, FIG. 5A shows a case in which the mobile terminal device 20 (imaging means 22) is oriented to the left with respect to the guide route image GR1, and since the forward direction of the guide route from the current position is to the right, an imaging direction instruction image is therefore displayed that calls for movement to the right. The image layout means 24 performs the computation described above on the basis of the detection output of the orientation detection means 23 and determines whether the guide route GR is included in the peripheral image that is displayed on the display screen of the display means 28.

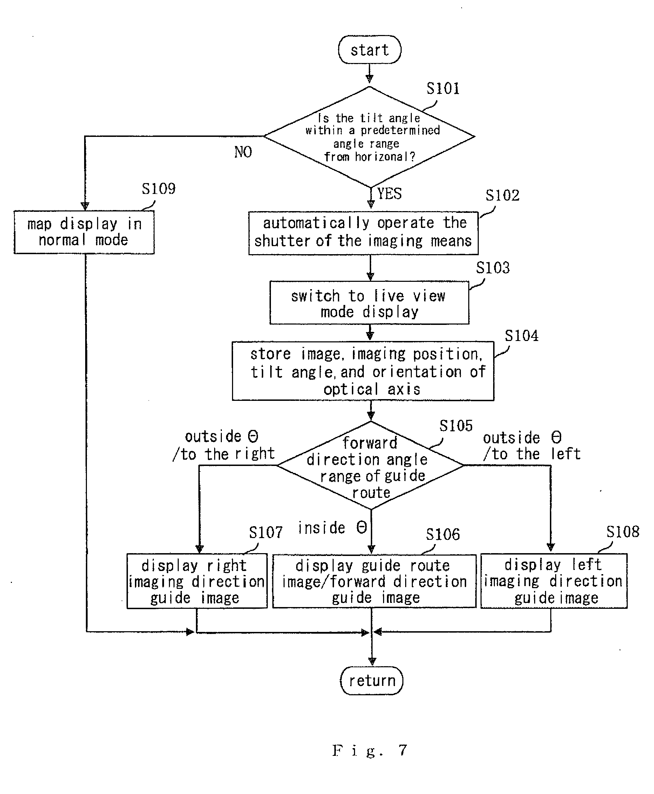

FIG. 7 is a flowchart showing the sequence of operations in the navigation system according to the embodiment of the present invention described above. The mobile terminal device 20 issues a route search request to the route search server 30 and receives and temporarily stores guide information that includes guide route data, guidance points, and other data from the route search server 30. The map image displayed by the display means 28 in this state is a general display mode that uses a plan-view map image.

First, in the routine of step S101, the tilt angle detected by the orientation detection means 23 is used as a basis to detect whether the mobile terminal device 20 (optical axis of the imaging means 22) is within a predetermined angle range with respect to the horizontal direction. The predetermined angle range may include average angles used when a typical person readies a camera to capture an image.

When the tilt angle of the mobile terminal device 20 with respect to horizontal is not within the predetermined angle range (NO), the process proceeds to the routine of step S109; a normal-mode display, i.e., a display using a plan-view map, is provided, and the process returns to the routine of step S101. When the tilt angle is within the predetermined angle range with respect to horizontal (YES), the shutter of the imaging means 22 is automatically operated in the routine of step S102, and a peripheral image in the optical axis direction is captured. The drawing control means 25 then switches to display control in the live view mode in the routine of step S103.

In the routine of step S102, the image data captured by the imaging means 22 are temporarily stored by an appropriate memory means in the routine of step S104 along with the current position at the time of imaging, the tilt angle detected by the orientation detection means 23, the bearing of the optical axis (orientation of the mobile terminal device 20), and other data. The process then proceeds to the routine of step S105, and as described with reference to FIG. 6, the image layout means 24 references the guide route data stored in the guide information storage means 27 on the basis of the field of view Θ with respect to the optical axis, and determines the forward direction of the guide route at the imaging point (current position).

In the determination routine of step S105, the process proceeds to the routine of step S106 when the forward direction of the guide route as viewed from the current position, i.e., the imaging position, is within the field of view Θ. The image layout means 24 calculates the display position of the guide route image and forward direction guide image, and the drawing control means 25 displays the guide route image and forward direction guide image in the predetermined display position of the peripheral image captured by the imaging means 22, on the basis of the computation results thereof, as described with reference to FIGS. 2 and 3 (see FIG. 5B).

In the determination routine of step S105, the process proceeds to the routine of step S108 when the forward direction of the guide route as viewed from the imaging position is not included in the field of view Θ, and is to the left as viewed from the optical axis AX; and the drawing control means 25 displays an instruction (the imaging direction guide image 53 of FIG. 5C) to move the imaging direction to the left. When the forward direction of the guide route from the imaging position P is not included in the field of view Θ, and is to the right as viewed from the optical axis AX, the process proceeds to the routine of step S107; and the drawing control means 25 displays an instruction (the imaging direction guide image 52 of FIG. 5A) to move the imaging direction to the right. After the display processing of steps S106 through S108, the process returns to the tilt angle determination routine of step S101.

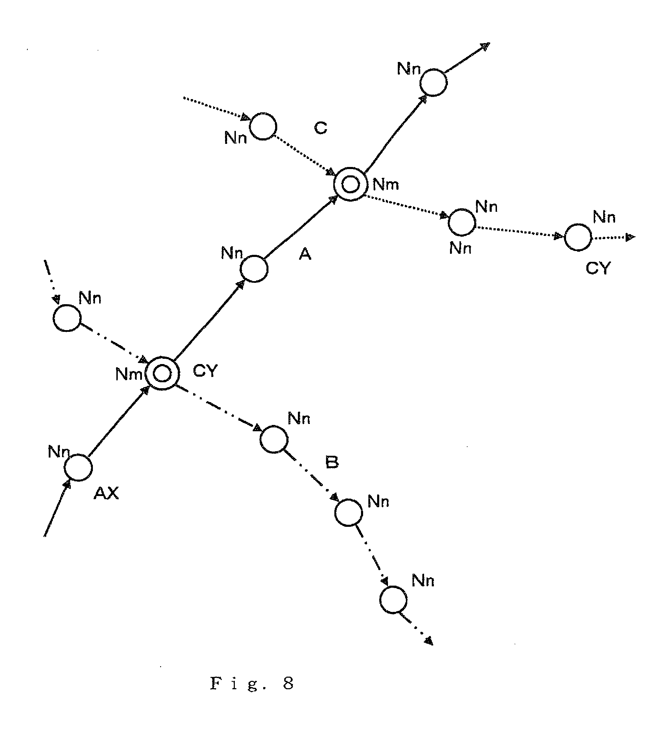

A route search in the route search server 30 will next be described. The route search network database 35 is provided with road network data and transportation network data. These network data are configured as described below. For example, when the roads are composed of roads A, B, and C as shown in FIG. 8, the end points, intersection points, turning points, and other points of roads A, B, and C are designated as nodes; roads linking the nodes are indicated by directional links; and the network data are composed of node data (node latitude/longitude), link data (link numbers), and link cost data in which link costs (distance between links or time required to travel to a link) between links are in the form of data.

Specifically, in FIG. 8, the reference symbols Nn (○) and Nm (⊚) indicate nodes, wherein Nm (⊚) indicates an intersection of roads. Directional links between nodes are indicated by arrow lines (solid lines, dashed lines, chain double-dashed lines). Links in the upstream and downstream directions of the roads are present, but only links in the direction of the arrows are shown in FIG. 8 to simplify the diagram.

When the data of such a road network is route-searched as a database for route searching, a link connected from the node of the departure point to the node of the destination point is traced, the link cost is accumulated, and the route having the smallest accumulated link cost is searched and used for guidance. Specifically, when a route search is performed using node AX in FIG. 8 as the departure point and node CY as the destination point, the link to node CY is traced in which road A is traveled from node AX, and a right turn into road C is made at the second intersection point, then the link cost is accumulated and the route having the smallest accumulated value for the link cost is searched and used for guidance.

Other routes from node AX to node CY are not shown in FIG. 8. However, other routes actually exist, and routes whereby it is possible to reach node CY from node AX are therefore searched in the same manner, and the route having the smallest link cost among the searched routes is determined to be the optimum route. This technique is in accordance with the publicly known technique known as Dijkstra's method, for example.

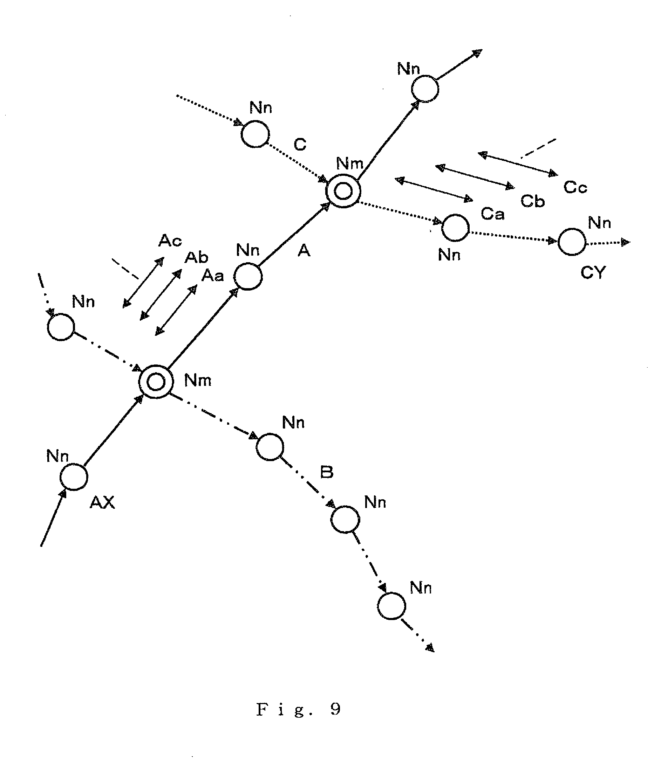

In contrast, transportation network data for a route search of transportation facilities are configured as described below. For example, when the transportation network data are composed of transportation lines A, B, and C as shown in FIG. 9, for example, train stations (airports in the case of an airplane route) provided to the transportation lines A, B, and C are designated as nodes, intervals linking the nodes are indicated by directional links, and node data (node latitude/longitude) and link data (link numbers) form the network data. In FIG. 9, the reference symbols Nn (○) and Nm (⊚) indicate nodes, wherein Nm (⊚) indicates a connection point (train-changing station or the like) between transportation routes, and directional links between nodes are indicated by arrow lines (solid lines, dashed lines, chain double-dashed lines). Links in the upstream and downstream directions of the roads are present, but only links in the direction of the arrows are shown in FIG. 9 to simplify the diagram.

However, the link costs in a transportation network are fundamentally different from those of a road network. Specifically, the link costs in the road network are fixed and static, whereas the transportation network has a plurality of trains or aircraft (trains, aircraft, and other routes are referred to hereinafter as modes of transportation) moving through the transportation lines, as shown in FIG. 9. The times of departure from the nodes of each mode of transportation are specific, as are the times of arrival at the subsequent nodes (specified in the timetable data and traffic data). There are also cases in which the routes do not necessarily link to adjacent nodes. This situation occurs in the case of express trains and local trains, for example. In such a case, a plurality of different links exists on the same transportation line, and the time required to travel between nodes may change according to the mode of transportation.

The example of the transportation network shown in FIG. 9 includes a plurality of transportation means (routes) Aa through Ac in the same link of a transportation line A, and a plurality of transportation means (routes) Ca through Cc in a transportation line C. Accordingly, the travel network of a transportation facility differs from a simple road network; the amount of data relating to nodes, links, and link costs therein is proportional to the sum total of the transportation means (routes of individual aircraft, trains, and the like). The amount of transportation network data is therefore extremely large in comparison to the amount of road network data. A correspondingly large amount of time is therefore needed to perform a route search.

All transportation means that can be used (ridden) to travel from a departure point to a destination point must be searched, and a transportation means that satisfies the search conditions must be specified in order to search the route from a certain departure point to a certain destination point using the type of transportation network data described above.

For example, in FIG. 9, when a route search is performed in which the departure point is node AX of transportation line A, a certain departure time is specified, and the destination point is node CY of transportation line C, all the transportation means subsequent to the departure time among the transportation means Aa through Ac traveling on transportation line A are selected as sequential departure time routes. Among the transportation means Ca through Cc traveling on transportation line C, the combination of all transportation means subsequent to the time at which boarding is possible in a connecting node is searched on the basis of the time of arrival at the connecting node to transportation line C; the time required for each route, the number of transfer connections, and other information is added together; and guidance is provided.

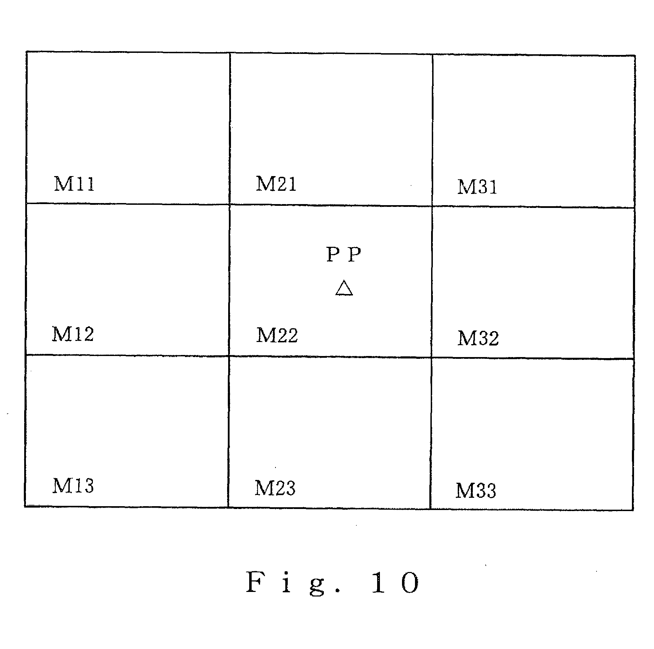

A guide route searched with reference to such network data is delivered to the mobile terminal device 20 along with vector map data. The map data accumulated in the map database 34 is composed of unit map data that are divided into predetermined latitude/longitude ranges, as shown in FIG. 10. The map data are divided into map areas by predetermined latitude/longitude units, as shown in FIG. 10, and form a matrix of unit map data M11 through M33. When the data are delivered to the mobile terminal device 20, the unit map data M22 that includes the current position PP of the mobile terminal device 20 is at the center, and a total of nine unit maps made up of unit map data M21, M23, M12, M32, M11, M13, M31, and M33 are delivered that are adjacent to the unit map data M22 in the vertical, horizontal, and diagonal directions.

When the mobile terminal device 20 moves and there are insufficient map data, the movement direction of the mobile terminal device 20 is determined, and the route search server 30 delivers the needed portion of unit map data. The same procedure applies when the mobile terminal device 20 requests delivery of map data for a specific point or position of a POI (Point of Interest). The guide route data are delivered together with the vector map data to the mobile terminal device 20. The mobile terminal device 20 thus receives the map data and guide route data from the route search server 30 and displays the map and the guide route in the display means 28.

The present invention can be used as a method for indicating the direction in which the guide route can be seen even when the walker strays slightly from the route, and the guide route disappears from the display screen.

In the present embodiment, a case was described in which the peripheral image captured by the imaging means 22 is still image, but a moving image may also be used if the image processing capability of the mobile terminal device 20 is adequately high.

In the present embodiment, when the optical axis of the imaging means 22 is within a predetermined angle from horizontal, the orientation detection means 23 detects this orientation, and the shutter of the imaging means 22 operates automatically. The switch to live view mode is therefore automatic, and the map display mode is returned to when the conditions described above are not satisfied. Consequently, the switch to the live view mode for displaying the peripheral image captured by the imaging means 22 does not occur during walking, and safety is maintained.

## Claims

1. A navigation system (10) comprising:
a route search server (30) provided with route search means (33) for referencing a route search network database (35) for route searching, and for searching a guide route from a departure point to a destination; and
a mobile terminal device (20) provided with guide information storage means (27) for storing guide information that includes guide route data, GPS receiving means (21) for determining a current position, imaging means (22), display means (28) for displaying a peripheral image captured by the imaging means (22), and drawing control means (25) for displaying a guide route image (GRI) on the peripheral image displayed by the display means (28); wherein
said mobile terminal (20) device has orientation detection means (23) configured to detect the orientation of the mobile terminal (20) device when said imaging means (22) captures the peripheral image and said orientation detection means (23) being also configured to determine an optical axis angle as the imaging direction of the imaging means (22), and said mobile terminal device (20) also including image layout means (24) for determining a display position of the guide route image (GRI) on the basis of the orientation of the mobile terminal (20) device as detected by said orientation detection means (23); and
**characterized by** said drawing control means (25) being configured to
display an imaging direction guide image (52, 53) on the displayed peripheral image for guiding the imaging means (22) toward an orientation at which a further peripheral image is to be captured by said imaging means (22) on the basis of a geometric computation from said optical axis angle, said current position, and an angle of a link or a position of a node of said guide route when said image layout means (24) determines that said guide route is not included in the peripheral image displayed by said display means (28),
and wherein said orientation detection means is further configured to detect an angle between the optical axis of the imaging means and a horizontal direction and said drawing control means displays said guide route image (GRI) on a display position of said display means based on a distance between the current position and a guide route node and said angle between the optical axis and the horizontal direction.

2. The navigation system according to claim 1, **characterized in that** said orientation detection means (23) comprises:
bearing detection means for detecting the orientation of the imaging means (22) when said imaging means (22) captures a peripheral image; and
tilt angle detection means for detecting the tilt angle of said imaging means (22) with respect to the horizontal direction.

3. The navigation system according to claim 1 or 2, **characterized in that** said image layout means (24) is configured to correct the display position of the guide route image (GRI) displayed on said peripheral image so that the upward direction of the peripheral image is vertical based on the angle of the optical axis of said imaging means (22), said image layout means (24) being also configured to shift said peripheral image by an amount that corresponds to the angle of the optical axis with the horizontal direction, and said image layout means (24) being also configured to correct and determine the display position so that the center of the peripheral image is in the horizontal direction, on the basis of the orientation of the mobile terminal device (20) as detected by said orientation detection means (23), when the guide route is included in said peripheral image displayed by the display means (28).

4. The navigation system according to claim 1, **characterized in that** said drawing control means (25) is configured to display the imaging direction guide image (52,53) for guiding the imaging means (22) from the current position toward a direction in which the guide route is present, as an orientation for imaging by said imaging means (22) on said peripheral image, when said image layout means (24) determines that the guide route from the current position is not included in said peripheral image displayed by said display means (28).

5. A mobile terminal device (20) connected via a network (12) to a route search server (30) provided with route search means (33) for referencing a route search network database (35) for route searching, and for searching a guide route from a departure point to a destination; said mobile terminal (20) device comprising:
guide information storage means (27) for storing guide information that includes guide route data;
GPS receiving means (21) for determining a current position;
imaging means (22);
display means (28) for displaying a peripheral image captured by the imaging means (22); and
drawing control means (25) for displaying a guide route image (GRI) on the peripheral image displayed by the display means (28); wherein
said mobile terminal device (20) further comprises orientation detection means (23) configured to detect the orientation of the mobile terminal device (20) when said imaging means (22) captures the peripheral image and said orientation detection means (23) being also configured to determine an optical axis angle as the imaging direction of the imaging means (22), and said mobile terminal device (20) also including image layout means (24) for determining a display position of the guide route image (GRI) on the basis of the orientation of the mobile terminal device (20) as detected by said orientation detection means (23),
**characterized by**
said drawing control means (25) being configured to display an imaging direction guide image (52, 53) on the displayed peripheral image for guiding the imaging means (22) toward an orientation at which a further peripheral image is to be captured by said imaging means (22) on the basis of a geometric computation from said optical axis angle, said current position, and an angle of a
link or a position of a node of said guide route when said image layout means (24) determines that said guide route is not included in the peripheral image displayed by said display means (28),
and wherein said orientation detection means detect an angle between the optical axis of the imaging means and a horizontal direction and said drawing control means displays said guide route (GRI) image on a display position of said display means based on a distance between the current position and a guide route node and said angle between the optical axis and the horizontal direction.

6. The mobile terminal device according to claim 5, **characterized in that** said orientation detection means (23) comprises:
bearing detection means for detecting the orientation of the imaging means (22) when said imaging means (22) captures a peripheral image; and
tilt angle detection means for detecting the tilt angle of said imaging means (22) with respect to the horizontal direction.

7. The mobile terminal device according to claim 5 or 6, **characterized in that** said image layout means (24) is configured to correct the display position of the guide route image (GRI) displayed on said peripheral image so that the upward direction of the peripheral image is vertical based on the angle of the optical axis of said imaging means (22), said image layout means (24) being also configured to shift said peripheral image by an amount that corresponds to the angle of the optical axis with the horizontal direction, and said image layout means (24) being also configured to correct and determine the display position so that the center of the peripheral image is in the horizontal direction, on the basis of the orientation of the mobile terminal device (20) as detected by said orientation detection means (23), when the guide route is included in said peripheral image displayed by the display means (28).

8. The mobile terminal device according to claim 5, **characterized in that** said drawing control means (25) is configured to display an imaging direction guide image for guiding the imaging means (22) from the current position toward a direction in which the guide route is present, as an orientation for imaging by said imaging means (22) on said peripheral image, when said image layout means (24) determines that the guide route from the current position is not included in said peripheral image displayed by said display means (28).

9. A guide display method for a mobile terminal device (20), said mobile terminal device (20) being connected via a network (12) to a route search server (30) provided with route search means (33) for referencing a route search network database (35) for route searching, and searching a guide route from a departure point to a destination; said mobile terminal device (20) comprising:
guide information storage means (27) for storing guide information that includes guide route data;
GPS receiving means (21) for determining a current position;
imaging means (22) ;
display means (28) for displaying a peripheral image captured by the imaging means (22); and
drawing control means (25) for displaying a guide route image (GRI) on the peripheral image displayed by the display means (28); wherein
said mobile terminal device (20) is further provided with orientation detection means (23) for detecting the orientation of the mobile terminal device (20) when said
imaging means (22) captures the peripheral image and for determining an optical axis angle as the imaging direction
of the imaging means (22), and image layout means (24) for determining a display position of the guide route image on the basis of the orientation of the mobile terminal device (20) as detected by said orientation detection means (23),
said route guide display method being **characterized by** comprising the following steps:
displaying an imaging direction guide image (52, 53) on the displayed peripheral image for guiding the imaging means (22) toward an orientation at which a further peripheral image is to be captured by said imaging means (22) on the basis of a geometric computation from said optical axis angle, said current position, and an angle of a link or a position of a node of said guide route when it is determined that said guide route is not included in the displayed peripheral image,
detecting an angle between the optical axis of the imaging means and a horizontal direction, and
displaying said guide route image (GRI) on a display position of said display means based on a distance between the current position and a guide route node and said angle between the optical axis and the horizontal direction.

10. The route guide display method according to claim 9, **characterized in that**:
said orientation detection means (23) comprises bearing detection means for detecting the orientation of the imaging means (22) when said imaging means (22) captures a peripheral image, and tilt angle detection means for detecting the tilt angle of said imaging means (22) with respect to the horizontal direction; and
said route guide display method comprises a step of said image layout means (24) determining, on the basis of detection output of said bearing detection means and tilt angle detection means, whether said guide route is included in said peripheral image displayed by said display means (22), and a step of said drawing control means (25) displaying an imaging direction guide image for guiding the imaging means (22) toward an orientation at which an image is to be captured by said imaging means (22) on said peripheral image on the basis of the orientation of said mobile terminal device (20) and the orientation of said guide route from the current position when said image layout means (24) determines that said guide route is not included in said peripheral image displayed by said display means (28).

11. The route guide display method according to claim 9 or 10, **characterized in** further comprising a step of determining the display position of the guide route image (GRI) displayed on said peripheral image, so that the upward direction of the peripheral image is vertical based on the angle of the optical axis of said imaging means (22), shifts said peripheral image by an amount that corresponds to the angle of the optical axis with the horizontal direction, and corrects and determines the display position so that the center of the peripheral image is in the horizontal direction, on the basis of the orientation of the mobile terminal device (20) as detected by said orientation detection means (23), when said image layout means (24) determines that the guide route is included in the peripheral image displayed by said display means (28), in the step of said image layout means (24) determining whether the guide route is included in the peripheral image displayed by said display means (28).

12. The route guide display method according to claim 11, **characterized in** further comprising a step of said drawing control means (25) displaying the imaging direction guide image (52, 53) for guiding the imaging means (22) from the current position toward a direction in which the guide route is present, as an orientation for imaging by said imaging means (22) on said peripheral image, when said image layout means (24) determines that the guide route from the current position is not included in said peripheral image displayed by said display means (28), in the step of said image layout means (24) determining whether the guide route from the current position is included in said peripheral image displayed by said display means (28).

## Patentansprüche

1. Navigationssystem (10), welches Folgendes umfasst:
einen Routensuchserver (30) versehen mit einem Routensuchmittel (33) zum Referenzieren einer Routensuchnetzwerkdatenbank (35) zur Routensuche und zum Durchsuchen einer Führungsroute von einem Ausgangspunkt zu einem Ziel; und
ein mobiles Endgerät (20) versehen mit einem Führungsinformationsspeichermittel (27) zum Speichern von Führungsinformationen, welches Führungsroutendaten, ein GPS-Empfangsmittel (21) zum Bestimmen einer aktuellen Position, ein Bildgebungsmittel (22), ein Anzeigemittel (28) zum Anzeigen eines peripheren Bildes aufgenommen durch das Bildgebungsmittel (22) und ein Zeichnungssteuerungsmittel (25) zum Anzeigen eines Führungsroutenbildes (GRI - *guide route image*) in dem peripheren Bild angezeigt durch das Anzeigemittel (28) beinhaltet; wobei
das mobile Endgerät (20) ein Richtungserkennungsmittel (23) aufweist, das dazu konfiguriert ist, die Richtung des mobilen Endgerätes (20) zu erkennen, wenn das Bildgebungsmittel (22) das periphere Bild aufnimmt, und wobei das Richtungserkennungsmittel (23) auch dazu konfiguriert ist, einen optischen Achsenwinkel als die Bildgebungsrichtung des Bildgebungsmittels (22) zu bestimmen, und wobei das mobile Endgerät (20) auch ein Bildlayoutmittel (24) zum Bestimmen einer Anzeigeposition des Führungsroutenbildes (GRI) auf der Grundlage der Richtung des mobilen Endgerätes (20), wie durch das Richtungserkennungsmittel (23) erkannt, beinhaltet; und
**dadurch gekennzeichnet, dass**
das Zeichnungssteuerungsmittel (25) dazu konfiguriert ist, ein Bildgebungsrichtungsführungsbild (52, 53) in dem angezeigten peripheren Bild zum Führen des Bildgebungsmittels (22) in Richtung einer Richtung, in welcher ein weiteres peripheres Bild durch das Bildgebungsmittel (22) auf der Grundlage einer geometrischen Berechnung aus dem optischen Achsenwinkel, der aktuellen Position und einem Winkel einer Verbindung oder einer Position eines Knotens der Führungsroute aufgenommen werden soll, anzuzeigen, wenn das Bildlayoutmittel (24) bestimmt, dass die Führungsroute nicht in dem peripheren Bild angezeigt durch das Anzeigemittel (28) enthalten ist,
und wobei das Richtungserkennungsmittel ferner dazu konfiguriert ist, einen Winkel zwischen der optischen Achse des Bildgebungsmittels und einer horizontalen Richtung zu erkennen, und das Zeichnungssteuerungsmittel das Führungsroutenbild (GRI) an einer Anzeigeposition des Anzeigemittels auf der Grundlage eines Abstandes zwischen der aktuellen Position und einem Führungsroutenknoten und des Winkelns zwischen der optischen Achse und der horizontalen Richtung anzeigt.

2. Navigationssystem nach Anspruch 1, **dadurch gekennzeichnet, dass** das Richtungserkennungsmittel (23) Folgendes umfasst:
ein Lageerkennungsmittel zum Erkennen der Richtung des Bildgebungsmittels (22), wenn das Bildgebungsmittel (22) ein peripheres Bild aufnimmt; und
ein Neigungswinkelerkennungsmittel zum Erkennen des Neigungswinkels des Bildgebungsmittels (22) in Bezug auf die horizontale Richtung.

3. Navigationssystem nach Anspruch 1 oder 2, **dadurch gekennzeichnet, dass** das Bildlayoutmittel (24) dazu konfiguriert ist, die Anzeigeposition des Führungsroutenbildes (GRI) angezeigt in dem peripheren Bild derart zu korrigieren, dass die Aufwärtsrichtung des peripheren Bildes auf der Grundlage des Winkels der optischen Achse des Bildgebungsmittels (22) vertikal ist, wobei das Bildlayoutmittel (24) auch dazu konfiguriert ist, das periphere Bild um eine Menge zu verschieben, die dem Winkel der optischen Achse zur horizontalen Richtung entspricht, und wobei das Bildlayoutmittel (24) auch dazu konfiguriert ist, die Anzeigeposition derart zu korrigieren und zu bestimmen, dass die Mitte des peripheren Bildes in der horizontalen Richtung liegt, und zwar auf der Grundlage der Richtung des mobilen Endgerätes (20), wie durch das Richtungserkennungsmittel (23) erkannt, wenn die Führungsroute in dem peripheren Bild angezeigt durch das Anzeigemittel (28) enthalten ist.

4. Navigationssystem nach Anspruch 1, **dadurch gekennzeichnet, dass** das Zeichnungssteuerungsmittel (25) dazu konfiguriert ist, das Bildgebungsrichtungsführungsbild (52, 53) zum Führen des Bildgebungsmittels (22) von der aktuellen Position in Richtung einer Richtung, in welcher die Führungsroute vorliegt, als eine Richtung für die Bildgebung durch das Bildgebungsmittel (22) in dem peripheren Bild anzuzeigen, wenn das Bildlayoutmittel (24) bestimmt, dass die Führungsroute von der aktuellen Position nicht in dem peripheren Bild angezeigt durch das Anzeigemittel (28) enthalten ist.

5. Mobiles Endgerät (20), das über ein Netzwerk (12) mit einem Routensuchserver (30), der mit einem Routensuchmittel (33) zum Referenzieren einer Routensuchnetzwerkdatenbank (35) zur Routensuche und zum Suchen einer Führungsroute von einem Ausgangspunkt zu einem Ziel versehen ist, verbunden ist; wobei das mobile Endgerät (20) Folgendes umfasst:
ein Führungsinformationsspeichermittel (27) zum Speichern von Führungsinformationen, welche Führungsroutendaten beinhalten;
ein GPS-Empfangsmittel (21) zum Bestimmen einer aktuellen Position;
ein Bildgebungsmittel (22);
ein Anzeigemittel (28) zum Anzeigen eines peripheren Bildes aufgenommen durch das Bildgebungsmittel (22); und
ein Zeichnungssteuerungsmittel (25) zum Anzeigen eines Führungsroutenbildes (GRI) in dem peripheren Bild angezeigt durch das Anzeigemittel (28); wobei
das mobile Endgerät (20) ferner ein Richtungserkennungsmittel (23) umfasst, das dazu konfiguriert ist, die Richtung des mobilen Endgerätes (20) zu erkennen, wenn das Bildgebungsmittel (22) das periphere Bild aufnimmt, und wobei das Richtungserkennungsmittel (23) auch dazu konfiguriert ist, einen optischen Achsenwinkel als die Bildgebungsrichtung des Bildgebungsmittels (22) zu erkennen, und wobei das mobile Endgerät (20) auch ein Bildlayoutmittel (24) zum Bestimmen einer Anzeigeposition des Führungsroutenbildes (GRI) auf der Grundlage der Richtung des mobilen Endgerätes (20), wie durch das Richtungserkennungsmittel (23) erkannt, beinhaltet,
**dadurch gekennzeichnet, dass**
das Zeichnungssteuerungsmittel (25) dazu konfiguriert ist, ein Bildgebungsrichtungsführungsbild (52, 53) in dem angezeigten peripheren Bild zum Führen des Bildgebungsmittels (22) in Richtung einer Richtung anzuzeigen, in welcher ein weiteres peripheres Bild durch das Bildgebungsmittel (22) aufgenommen werden soll, und zwar auf der Grundlage einer geometrischen Berechnung aus dem optischen Achsenwinkel, der aktuellen Position und einem Winkel einer Verbindung oder einer Position eines Knotens der Führungsroute, wenn das Bildlayoutmittel (24) bestimmt, dass die Führungsroute nicht in dem peripheren Bild angezeigt durch das Anzeigemittel (28) enthalten ist,
und wobei das Richtungserkennungsmittel einen Winkel zwischen der optischen Achse des Bildgebungsmittels und einer horizontalen Richtung erkennt und das Zeichnungssteuerungsmittel das Führungsroutenbild (GRI) an einer Anzeigeposition des Anzeigemittels auf der Grundlage eines Abstandes zwischen der aktuellen Position und einem Führungsroutenknoten und des Winkels zwischen der optischen Achse und der horizontalen Richtung anzeigt.

6. Mobiles Endgerät nach Anspruch 5, **dadurch gekennzeichnet, dass** das Richtungserkennungsmittel (23) Folgendes umfasst:
ein Lageerkennungsmittel zum Erkennen der Richtung des Bildgebungsmittels (22), wenn das Bildgebungsmittel (22) ein peripheres Bild aufnimmt; und
ein Neigungswinkelerkennungsmittel zum Erkennen des Neigungswinkels des Bildgebungsmittels (22) in Bezug auf die horizontale Richtung.

7. Mobiles Endgerät nach Anspruch 5 oder 6, **dadurch gekennzeichnet, dass** das Bildlayoutmittel (24) dazu konfiguriert ist, die Anzeigeposition des Führungsroutenbildes (GRI) angezeigt in dem peripheren Bild derart zu korrigieren, dass die Aufwärtsrichtung des peripheren Bildes auf der Grundlage des Winkels der optischen Achse des Bildgebungsmittels (22) vertikal ist, wobei das Bildlayoutmittel (24) auch dazu konfiguriert ist, das periphere Bild um eine Menge zu verschieben, die dem Winkel der optischen Achse zur horizontalen Richtung entspricht, und wobei das Bildlayoutmittel (24) auch dazu konfiguriert ist, die Anzeigeposition derart zu korrigieren und zu bestimmen, dass die Mitte des peripheren Bildes in der horizontalen Richtung liegt, und zwar auf der Grundlage der Richtung des mobilen Endgerätes (20), wie durch das Richtungserkennungsmittel (23) erkannt, wenn die Führungsroute in dem peripheren Bild angezeigt durch das Anzeigemittel (28) enthalten ist.

8. Mobiles Endgerät nach Anspruch 5, **dadurch gekennzeichnet, dass** das Zeichnungssteuerungsmittel (25) dazu konfiguriert ist, ein Bildgebungsrichtungsführungsbild zum Führen des Bildgebungsmittels (22) von der aktuellen Position in Richtung einer Richtung, in welcher die Führungsroute vorliegt, als eine Richtung für die Bildgebung durch das Bildgebungsmittel (22) in dem peripheren Bild anzuzeigen, wenn das Bildlayoutmittel (24) bestimmt, dass die Führungsroute von der aktuellen Position nicht in dem peripheren Bild angezeigt durch das Anzeigemittel (28) enthalten ist.

9. Führungsanzeigeverfahren für ein mobiles Endgerät (20), wobei das mobile Endgerät (20) über ein Netzwerk (12) mit einem Routensuchserver (30), der mit Routensuchmitteln (33) zum Referenzieren einer Routensuchnetzwerkdatenbank (35) zur Routensuche und zum Suchen einer Führungsroute von einem Ausgangspunkt zu einem Ziel versehen ist, verbunden ist; wobei das mobile Endgerät (20) Folgendes umfasst:
ein Führungsinformationsspeichermittel (27) zum Speichern von Führungsinformationen, welche Führungsroutendaten beinhalten;
ein GPS-Empfangsmittel (21) zum Bestimmen einer aktuellen Position;
ein Bildgebungsmittel (22);
ein Anzeigemittel (28) zum Anzeigen eines peripheren Bildes aufgenommen durch das Bildgebungsmittel (22); und
ein Zeichnungssteuerungsmittel (25) zum Anzeigen eines Führungsroutenbildes (GRI) in dem peripheren Bild angezeigt durch das Anzeigemittel (28); wobei
das mobile Endgerät (20) ferner mit einem Richtungserkennungsmittel (23) zum Erkennen der Richtung des mobilen Endgerätes (20), wenn das Bildgebungsmittel (22) das periphere Bild aufnimmt, und zum Bestimmen eines optischen Achsenwinkels als die Bildgebungsrichtung des Bildgebungsmittels (22) und einem Bildlayoutmittel (24) zum Bestimmen einer Anzeigeposition des Führungsroutenbildes auf der Grundlage der Richtung des mobilen Endgerätes (20), wie durch das Richtungserkennungsmittel (23) erkannt, versehen ist,
wobei das Routenführungsanzeigeverfahren **dadurch**
**gekennzeichnet** ist, das es die Folgenden Schritte umfasst:
Anzeigen eines Bildgebungsrichtungsführungsbildes (52, 53) in dem angezeigten peripheren Bild zum Führen des Bildgebungsmittels (22) in Richtung einer Richtung, in welcher ein weiteres peripheres Bild durch das Bildgebungsmittel (22) aufgenommen werden soll, und zwar auf der Grundlage einer geometrischen Berechnung aus dem optischen Achsenwinkel, der aktuellen Position und einem Winkel einer Verbindung oder einer Position eines Knotens der Führungsroute, wenn bestimmt wird, dass die Führungsroute nicht in dem angezeigten peripheren Bild enthalten ist,
Erkennen eines Winkels zwischen der optischen Achse des Bildgebungsmittels und einer horizontalen Richtung, und
Anzeigen des Führungsroutenbildes (GRI) an einer Anzeigeposition des Anzeigemittels auf der Grundlage eines Abstandes zwischen der aktuellen Position und einem Führungsroutenknoten und des Winkels zwischen der optischen Achse und der horizontalen Richtung.

10. Routenführungsanzeigeverfahren nach Anspruch 9, **dadurch gekennzeichnet, dass**:
das Richtungserkennungsmittel (23) ein Lageerkennungsmittel zum Erkennen der Richtung des Bildgebungsmittels (22), wenn das Bildgebungsmittel (22) ein peripheres Bild aufnimmt, und ein Neigungswinkelerkennungsmittel zum Erkennen des Neigungswinkels des Bildgebungsmittels (22) in Bezug auf die horizontale Richtung umfasst; und
das Routenführungsanzeigeverfahren einen Schritt des Bildlayoutmittels (24) umfasst, welcher, auf der Grundlage einer Erkennungsausgabe des Lageerkennungsmittels und des Neigungswinkelerkennungsmittels, bestimmt, ob die Führungsroute in dem peripheren Bild angezeigt durch das Anzeigemittel (22) enthalten ist, sowie einen Schritt des Zeichnungssteuerungsmittels (25), welcher ein Bildgebungsrichtungsführungsbild zum Führen des Bildgebungsmittels (22) in Richtung einer Richtung, in welcher ein Bild durch das Bildgebungsmittel (22) aufgenommen werden soll, in dem peripheren Bild anzeigt, und zwar auf der Grundlage der Richtung des mobilen Endgerätes (20) und der Richtung der Führungsroute von der aktuellen Position, wenn das Bildlayoutmittel (24) bestimmt, dass die Führungsroute nicht in dem peripheren Bild angezeigt durch das Anzeigemittel (28) enthalten ist.

11. Routenführungsanzeigeverfahren nach Anspruch 9 oder 10, **dadurch gekennzeichnet, dass** es ferner einen Schritt des Bestimmens der Anzeigeposition des Führungsroutenbildes (GRI) angezeigt in dem peripheren Bild, derart, dass die Aufwärtsrichtung des peripheren Bildes auf der Grundlage des Winkels der optischen Achse des Bildgebungsmittels (22) vertikal ist, sowie des Verschiebens des peripheren Bildes um eine Menge, die dem Winkel der optischen Achse zur horizontalen Richtung entspricht, und des Korrigierens und Bestimmens der Anzeigeposition, derart, dass die Mitte des peripheren Bildes in der horizontalen Richtung liegt, und zwar auf der Grundlage der Richtung des mobilen Endgerätes (20), wie durch das Richtungserkennungsmittel (23) erkannt, wenn das Bildlayoutmittel (24) bestimmt, dass die Führungsroute in dem peripheren Bild angezeigt durch das Anzeigemittel (28) enthalten ist, umfasst, wobei in dem Schritt des Bildlayoutmittels (24) bestimmt wird, ob die Führungsroute in dem peripheren Bild angezeigt durch das Anzeigemittel (28) enthalten ist.

12. Routenführungsanzeigeverfahren nach Anspruch 11, **dadurch gekennzeichnet, dass** es ferner einen Schritt des Zeichnungssteuerungsmittels (25) zum Anzeigen des Bildgebungsrichtungsführungsbildes (52, 53) zum Führen des Bildgebungsmittels (22) von der aktuellen Position in Richtung einer Richtung, in welcher die Führungsroute vorliegt, als eine Richtung für die Bildgebung durch das Bildgebungsmittel (22) in dem peripheren Bild, wenn das Bildlayoutmittel (24) bestimmt, dass die Führungsroute von der aktuellen Position nicht in dem peripheren Bild angezeigt durch das Anzeigemittel (28) enthalten ist, umfasst, wobei in dem Schritt des Bildlayoutmittels (24) bestimmt wird, ob die Führungsroute von der aktuellen Position in dem peripheren Bild angezeigt durch das Anzeigemittel (28) enthalten ist.

## Revendications

1. Système de navigation (10) comprenant :
un serveur de recherche d'itinéraire (30) muni d'un moyen de recherche d'itinéraire (33) pour référencer une base de données de réseau de recherche d'itinéraire (35) pour la recherche d'itinéraire et pour rechercher un itinéraire de guidage à partir d'un point de départ jusqu'à une destination ; et
un dispositif de terminal mobile (20) muni d'un moyen de stockage d'informations de guidage (27) pour stocker des informations de guidage qui comportent des données d'itinéraire de guidage, d'un moyen de réception GPS (21) pour déterminer une position actuelle, d'un moyen d'imagerie (22), d'un moyen d'affichage (28) pour afficher une image périphérique capturée par le moyen d'imagerie (22) et d'un moyen de commande de dessin (25) pour afficher une image d'itinéraire de guidage (GRI) sur l'image périphérique affichée par le moyen d'affichage (28) ; où
ledit dispositif de terminal mobile (20) a un moyen de détection d'orientation (23) configuré pour détecter l'orientation du dispositif de terminal mobile (20) lorsque ledit moyen d'imagerie (22) capture l'image périphérique et ledit moyen de détection d'orientation (23) étant également configuré pour déterminer un angle d'axe optique comme étant la direction d'imagerie du moyen d'imagerie (22), et ledit dispositif de terminal mobile (20) comportant également un moyen de présentation d'image (24) pour déterminer une position d'affichage de l'image d'itinéraire de guidage (GRI) sur la base de l'orientation du dispositif de terminal mobile (20) telle que détectée par ledit moyen de détection d'orientation (23) ; et
**caractérisé par**
ledit moyen de commande de dessin (25) étant configuré pour afficher une image de guidage de direction d'imagerie (52, 53) sur l'image périphérique affichée pour le guidage du moyen d'imagerie (22) vers une orientation à laquelle une image périphérique supplémentaire doit être capturée par ledit moyen d'imagerie (22) sur la base d'un calcul géométrique à partir dudit angle d'axe optique, de ladite position actuelle et d'un angle d'une liaison ou d'une position d'un noeud dudit itinéraire de guidage lorsque ledit moyen de présentation d'image (24) détermine que ledit itinéraire de guidage n'est pas inclus dans l'image périphérique affichée par ledit moyen d'affichage (28),
et dans lequel ledit moyen de détection d'orientation est en outre configuré pour détecter un angle entre l'axe optique du moyen d'imagerie et une direction horizontale et ledit moyen de commande de dessin affiche ladite image d'itinéraire de guidage (GRI) sur une position d'affichage dudit moyen d'affichage sur la base d'une distance entre la position actuelle et un noeud d'itinéraire de guidage et dudit angle entre l'axe optique et la direction horizontale.

2. Système de navigation selon la revendication 1, **caractérisé en ce que** ledit moyen de détection d'orientation (23) comprend :
un moyen de détection de palier pour détecter l'orientation du moyen d'imagerie (22) lorsque ledit moyen d'imagerie (22) capture une image périphérique ; et
un moyen de détection d'angle d'inclinaison pour détecter l'angle d'inclinaison dudit moyen d'imagerie (22) par rapport à la direction horizontale.

3. Système de navigation selon la revendication 1 ou 2, **caractérisé en ce que** ledit moyen de présentation d'image (24) est configuré pour corriger la position d'affichage de l'image d'itinéraire de guidage (GRI) affichée sur ladite image périphérique de sorte que la direction vers le haut de l'image périphérique soit verticale sur la base de l'angle de l'axe optique dudit moyen d'imagerie (22), ledit moyen de présentation d'image (24) étant également configuré pour décaler ladite image périphérique par une quantité qui correspond à l'angle de l'axe optique avec la direction horizontale, et ledit moyen de présentation d'image (24) étant également configuré pour corriger et déterminer la position d'affichage de sorte que le centre de l'image périphérique soit dans la direction horizontale, sur la base de l'orientation du dispositif de terminal mobile (20) telle que détectée par ledit moyen de détection d'orientation (23), lorsque l'itinéraire de guidage est inclus dans ladite image périphérique affichée par le moyen d'affichage (28).

4. Système de navigation selon la revendication 1, **caractérisé en ce que** ledit moyen de commande de dessin (25) est configuré pour afficher l'image de guidage de direction d'imagerie (52, 53) pour guider le moyen d'imagerie (22) à partir de la position actuelle vers une direction dans laquelle l'itinéraire de guidage est présent, en tant qu'orientation pour effectuer une imagerie par ledit moyen d'imagerie (22) sur ladite image périphérique, lorsque ledit moyen de présentation d'image (24) détermine que l'itinéraire de guidage à partir de la position actuelle n'est pas inclus dans ladite image périphérique affichée par ledit moyen d'affichage (28).

5. Dispositif de terminal mobile (20) relié via un réseau (12) à un serveur de recherche d'itinéraire (30) muni d'un moyen de recherche d'itinéraire (33) pour référencer une base de données de réseau de recherche d'itinéraire (35) pour la recherche d'itinéraire et pour rechercher un itinéraire de guidage à partir d'un point de départ jusqu'à une destination ; ledit dispositif de terminal mobile (20) comprenant :
un moyen de stockage d'informations de guidage (27) pour stocker des informations de guidage qui comportent des données d'itinéraire de guidage ;
un moyen de réception GPS (21) pour déterminer une position actuelle ;
un moyen d'imagerie (22) ;
un moyen d'affichage (28) pour afficher une image périphérique capturée par le moyen d'imagerie (22) ; et
un moyen de commande de dessin (25) pour afficher une image d'itinéraire de guidage (GRI) sur l'image périphérique affichée par le moyen d'affichage (28) ; où
ledit dispositif de terminal mobile (20) comprend en outre un moyen de détection d'orientation (23) configuré pour détecter l'orientation du dispositif de terminal mobile (20) lorsque ledit moyen d'imagerie (22) capture l'image périphérique et ledit moyen de détection d'orientation (23) étant également configuré pour déterminer un angle d'axe optique comme étant la direction d'imagerie du moyen d'imagerie (22), et ledit dispositif de terminal mobile (20) comportant également un moyen de présentation d'image (24) pour déterminer une position d'affichage de l'image d'itinéraire de guidage (GRI) sur la base de l'orientation du dispositif de terminal mobile (20) telle que détectée par ledit moyen de détection d'orientation (23),
**caractérisé par**
ledit moyen de commande de dessin (25) étant configuré pour afficher une image de guidage de direction d'imagerie (52, 53) sur l'image périphérique affichée pour le guidage du moyen d'imagerie (22) vers une orientation à laquelle une image périphérique supplémentaire doit être capturée par ledit moyen d'imagerie (22) sur la base d'un calcul géométrique à partir dudit angle d'axe optique, de ladite position actuelle et d'un angle d'une liaison ou d'une position d'un noeud dudit itinéraire de guidage lorsque ledit moyen de présentation d'image (24) détermine que ledit itinéraire de guidage n'est pas inclus dans l'image périphérique affichée par ledit moyen d'affichage (28),
et dans lequel ledit moyen de détection d'orientation détecte un angle entre l'axe optique du moyen d'imagerie et une direction horizontale et ledit moyen de commande de dessin affiche ladite image d'itinéraire de guidage (GRI) sur une position d'affichage dudit moyen d'affichage sur la base d'une distance entre la position actuelle et un noeud d'itinéraire de guidage et dudit angle entre l'axe optique et la direction horizontale.

6. Dispositif de terminal mobile selon la revendication 5, **caractérisé en ce que** ledit moyen de détection d'orientation (23) comprend :
un moyen de détection de palier pour détecter l'orientation du moyen d'imagerie (22) lorsque ledit moyen d'imagerie (22) capture une image périphérique ; et
un moyen de détection d'angle d'inclinaison pour détecter l'angle d'inclinaison dudit moyen d'imagerie (22) par rapport à la direction horizontale.

7. Dispositif de terminal mobile selon la revendication 5 ou 6, **caractérisé en ce que** ledit moyen de présentation d'image (24) est configuré pour corriger la position d'affichage de l'image d'itinéraire de guidage (GRI) affichée sur ladite image périphérique de sorte que la direction vers le haut de l'image périphérique soit verticale sur la base de l'angle de l'axe optique dudit moyen d'imagerie (22), ledit moyen de présentation d'image (24) étant également configuré pour décaler ladite image périphérique par une quantité qui correspond à l'angle de l'axe optique avec la direction horizontale, et ledit moyen de présentation d'image (24) étant également configuré pour corriger et déterminer la position d'affichage de sorte que le centre de l'image périphérique soit dans la direction horizontale, sur la base de l'orientation du dispositif de terminal mobile (20) telle que détectée par ledit moyen de détection d'orientation (23), lorsque l'itinéraire de guidage est inclus dans ladite image périphérique affichée par le moyen d'affichage (28).

8. Dispositif de terminal mobile selon la revendication 5, **caractérisé en ce que** ledit moyen de commande de dessin (25) est configuré pour afficher une image de guidage de direction d'imagerie pour guider le moyen d'imagerie (22) à partir de la position actuelle vers une direction dans laquelle l'itinéraire de guidage est présent, en tant qu'orientation pour effectuer une imagerie par ledit moyen d'imagerie (22) sur ladite image périphérique, lorsque ledit moyen de présentation d'image (24) détermine que l'itinéraire de guidage à partir de la position actuelle n'est pas inclus dans ladite image périphérique affichée par ledit moyen d'affichage (28).

9. Procédé d'affichage de guidage pour un dispositif de terminal mobile (20), ledit dispositif de terminal mobile (20) étant relié via un réseau (12) à un serveur de recherche d'itinéraire (30) muni d'un moyen de recherche d'itinéraire (33) pour référencer une base de données de réseau de recherche d'itinéraire (35) pour la recherche d'itinéraire et pour rechercher un itinéraire de guidage à partir d'un point de départ jusqu'à une destination ; ledit dispositif de terminal mobile (20) comprenant :
un moyen de stockage d'informations de guidage (27) pour stocker des informations de guidage qui comportent des données d'itinéraire de guidage ;
un moyen de réception GPS (21) pour déterminer une position actuelle ;
un moyen d'imagerie (22) ;
un moyen d'affichage (28) pour afficher une image périphérique capturée par le moyen d'imagerie (22) ; et
un moyen de commande de dessin (25) pour afficher une image d'itinéraire de guidage (GRI) sur l'image périphérique affichée par le moyen d'affichage (28) ; où
ledit dispositif de terminal mobile (20) est en outre muni d'un moyen de détection d'orientation (23) pour détecter l'orientation du dispositif de terminal mobile (20) lorsque ledit moyen d'imagerie (22) capture l'image périphérique et pour déterminer un angle d'axe optique comme étant la direction d'imagerie du moyen d'imagerie (22) et un moyen de présentation d'image (24) pour déterminer une position d'affichage de l'image d'itinéraire de guidage sur la base de l'orientation du dispositif de terminal mobile (20) telle que détectée par ledit moyen de détection d'orientation (23),
ledit procédé d'affichage de guidage d'itinéraire étant **caractérisé en ce qu'**il comprend les étapes suivantes qui consistent :
à afficher une image de guidage de direction d'imagerie (52, 53) sur l'image périphérique affichée pour le guidage du moyen d'imagerie (22) vers une orientation à laquelle une image périphérique supplémentaire doit être capturée par ledit moyen d'imagerie (22) sur la base d'un calcul géométrique à partir dudit angle d'axe optique, de ladite position actuelle et d'un angle d'une liaison ou d'une position d'un noeud dudit itinéraire de guidage, lorsqu'il est déterminé que ledit itinéraire de guidage n'est pas inclus dans l'image périphérique affichée,
à détecter un angle entre l'axe optique du moyen d'imagerie et une direction horizontale, et
à afficher ladite image d'itinéraire de guidage (GRI) sur une position d'affichage dudit moyen d'affichage sur la base d'une distance entre la position actuelle et un noeud d'itinéraire de guidage et dudit angle entre l'axe optique et la direction horizontale.

10. Procédé d'affichage de guidage d'itinéraire selon la revendication 9, **caractérisé en ce que** :
ledit moyen de détection d'orientation (23) comprend un moyen de détection de palier pour détecter l'orientation du moyen d'imagerie (22) lorsque ledit moyen d'imagerie (22) capture une image périphérique et un moyen de détection d'angle d'inclinaison pour détecter l'angle d'inclinaison dudit moyen d'imagerie (22) par rapport à la direction horizontale ; et
ledit procédé d'affichage de guidage d'itinéraire comprend une étape dudit moyen de présentation d'image (24) qui consiste à déterminer, sur la base de la sortie de détection dudit moyen de détection de palier et dudit moyen de détection d'angle d'inclinaison, si ledit itinéraire de guidage est inclus dans ladite image périphérique affichée par ledit moyen d'affichage (22) et une étape dudit moyen de commande de dessin (25) qui consiste à afficher une image de guidage de direction d'imagerie pour guider le moyen d'imagerie (22) vers une orientation à laquelle une image doit être capturée par ledit moyen d'imagerie (22) sur ladite image périphérique sur la base de l'orientation dudit dispositif de terminal mobile (20) et de l'orientation dudit itinéraire de guidage à partir de la position actuelle lorsque ledit moyen de présentation d'image (24) détermine que ledit itinéraire de guidage n'est pas inclus dans ladite image périphérique affichée par ledit moyen d'affichage (28).

11. Procédé d'affichage de guidage d'itinéraire selon la revendication 9 ou 10, **caractérisé en ce qu'**il comprend en outre une étape qui consiste
à déterminer la position d'affichage de l'image d'itinéraire de guidage (GRI) affichée sur ladite image périphérique, de sorte que la direction vers le haut de l'image périphérique soit verticale sur la base de l'angle de l'axe optique dudit moyen d'imagerie (22), décale ladite image périphérique par une quantité qui correspond à l'angle de l'axe optique avec la direction horizontale, et corrige et détermine la position d'affichage de sorte que le centre de l'image périphérique soit dans la direction horizontale, sur la base de l'orientation du dispositif de terminal mobile (20) telle que détectée par ledit moyen de détection d'orientation (23), lorsque ledit moyen de présentation d'image (24) détermine que l'itinéraire de guidage est inclus dans l'image périphérique affichée par ledit moyen d'affichage (28), dans l'étape dudit moyen de présentation d'image (24) qui consiste à déterminer si l'itinéraire de guidage est inclus dans l'image périphérique affichée par ledit moyen d'affichage (28).

12. Procédé d'affichage de guidage d'itinéraire selon la revendication 11, **caractérisé en ce qu'**il comprend en outre une étape dudit moyen de commande de dessin (25) qui consiste à afficher l'image de guidage de direction d'imagerie (52, 53) pour guider le moyen d'imagerie (22) à partir de la position actuelle vers une direction dans laquelle l'itinéraire de guidage est présent, en tant qu'orientation pour effectuer une imagerie par ledit moyen d'imagerie (22) sur ladite image périphérique, lorsque ledit moyen de présentation d'image (24) détermine que l'itinéraire de guidage à partir de la position actuelle n'est pas inclus dans ladite image périphérique affichée par ledit moyen d'affichage (28), dans l'étape dudit moyen de présentation d'image (24) qui consiste à déterminer si l'itinéraire de guidage à partir de la position actuelle est inclus dans ladite image périphérique affichée par ledit moyen d'affichage (28).
